# EUROPEAN PATENT APPLICATION

(11) **EP 3 849 219 A1**
(43) Date of publication of application: **14.07.2021**
(21) Application number: 19867972.2
(22) Date of filing: 12.09.2019
(51) Int. Cl.: H04W 4/06

(54) **MULTICAST/BROADCAST SERVICE TRANSMISSION METHOD, CORE NETWORK ELEMENT AND TERMINAL DEVICE**

(30) Priority: 30.09.2018 CN 201811159996
(71) Applicant: Huawei Technologies Co., Ltd., Longgang Shenzhen, Guangdong 518129 (CN)
(72) Inventor: LI, Meng, Shenzhen, Guangdong 518129 (CN); YANG, Yanmei, Shenzhen, Guangdong 518129 (CN); YING, Jiangwei, Shenzhen, Guangdong 518129 (CN)
(74) Representative: Gill Jennings & Every LLP
(86) International application number: PCT/CN2019/105586
(87) International publication number: WO 2020/063362

(57) **Abstract**

This application provides a multicast/broadcast service transmission method, a core network element, and a terminal device. The method includes: A first core network element obtains a multicast/broadcast access type supported by a terminal device that is located in a first service area of a multicast/broadcast service and that belongs to a group corresponding to the multicast/broadcast service. The first core network element determines a multicast/broadcast transmission type of the multicast/broadcast service in the first service area based on the multicast/broadcast access type supported by the terminal device. The first core network element notifies an access network element corresponding to the multicast/broadcast service to use the multicast/broadcast transmission type to transmit data of the multicast/broadcast service. According to the method in this application, the first core network element may determine a specific RAT based on which multicast/broadcast transmission is performed, to better adapt to a case in which a terminal device supports a plurality of RATs in a 5G mobile communications system, and improve multicast/broadcast transmission efficiency.

## Description

This application claims priority to Chinese Patent Application No. 201811159996.5, filed with the China Patent Office on September 30, 2018 and entitled "MULTICAST/BROADCAST SERVICE TRANSMISSION METHOD, CORE NETWORK ELEMENT, AND TERMINAL DEVICE", which is incorporated herein by reference in its entirety.

### TECHNICAL FIELD

This application relates to the communications field, and more specifically, to a multicast/broadcast service transmission method, a core network element, and a terminal device.

### BACKGROUND

In a mobile communications system being promoted by the 3rd generation partnership project (the 3rd generation partnership project, 3GPP), there is a requirement that a network side sends same data to a plurality of terminal devices, that is, there is a point-to-multipoint service transmission requirement.

For the point-to-multipoint service transmission requirement, a multi-link transmission mode may be used. To be specific, point-to-multipoint service transmission is implemented in a mode of a plurality of unicast links. Specifically, the network side establishes a plurality of transmission links, and a sender sends a plurality of copies of data. Alternatively, a shared-link transmission mode may be used. To be specific, the network side provides a link shared by a plurality of receivers, a sender sends only one piece of data, and the network side replicates the data and transmits the data to the plurality of receivers. In an existing specific associated delivery procedure (associated delivery procedure, ADP), a broadcast/multicast service center (broadcast multicast service center, BM-SC) network element or an application function (application function, AF) network element in a core network may collect statistics about a quantity of terminal devices, to determine whether to use a multi-link transmission mode or a shared-link transmission mode to perform point-to-multipoint service transmission.

In a new radio (new radio, NR) mobile communications system, that is, a 5th generation (5th generation, 5G) mobile communications system, a terminal device may support multicast/broadcast of a plurality of different radio access technologies (radio access technology, RAT). In this case, it is not enough for a network side to only determine whether to use a multi-link transmission mode or a shared-link transmission mode, and the network side and the terminal device still do not know a specific RAT based on which point-to-multipoint service transmission is performed. Therefore, a decision process of an existing transmission solution for point-to-multipoint service transmission is not applicable to a scenario in which a terminal device supports multicast/broadcast of a plurality of RATs.

### SUMMARY

This application provides a multicast/broadcast service transmission method, a core network element, and a terminal device, to adapt to a case in which a terminal device supports a plurality of RATs in a 5G mobile communications system, and improve multicast/broadcast transmission efficiency.

According to a first aspect, a multicast/broadcast service transmission method is provided. The method includes: A first core network element obtains a multicast/broadcast access type supported by a terminal device that is located in a first service area of a multicast/broadcast service and that belongs to a group corresponding to the multicast/broadcast service. The first core network element determines a multicast/broadcast transmission type of the multicast/broadcast service in the first service area based on the multicast/broadcast access type supported by the terminal device. The first core network element notifies an access network element corresponding to the multicast/broadcast service to use the multicast/broadcast transmission type to transmit data of the multicast/broadcast service.

According to the multicast/broadcast service transmission method provided in the first aspect, the first core network element obtains the multicast/broadcast access type supported by the terminal device in the group corresponding to the multicast/broadcast service, determines the multicast/broadcast transmission type of the multicast/broadcast service in the first service area based on the multicast/broadcast access type supported by the terminal device, and notifies the access network element. Therefore, the first core network element may determine a specific RAT based on which multicast/broadcast transmission is performed, to better adapt to a case in which a terminal device supports a plurality of RATs in a 5G mobile communications system, and improve multicast/broadcast transmission efficiency.

The first service area is an area in which the data of the multicast/broadcast service is transmitted. A specific form of the first service area may be a cell list, or may be a tracking area list.

The group corresponding to the multicast/broadcast service represents a set of terminal devices that receive the multicast/broadcast service.

The multicast/broadcast transmission type includes one or more of the following: multicast/broadcast of an NR system, multicast/broadcast of a multicast/broadcast single frequency network (multicast/broadcast single frequency network, MBSFN), or multicast/broadcast of single-cell point-to-multipoint (single cell point to multipoint, SCPTM).

The access network element corresponding to the multicast/broadcast service may be replaced with an access network element corresponding to the first service area.

The access network element corresponding to the multicast/broadcast service is an access network element that receives the data of the multicast/broadcast service from the core network element and that sends the data of the multicast/broadcast service to the terminal device.

The access network element corresponding to the first service area may be an access network element that provides a service for a terminal device in the first service area.

In a possible implementation of the first aspect, that the first core network element determines a multicast/broadcast transmission type of the multicast/broadcast service in the first service area based on the multicast/broadcast access type supported by the terminal device includes: When a quantity of terminal devices in the group corresponding to the multicast/broadcast service in the first service area is greater than or equal to a preset value, the first core network element determines the multicast/broadcast transmission type of the multicast/broadcast service in the first service area based on the multicast/broadcast access type supported by the terminal device. In this possible implementation, the first core network element may determine the multicast/broadcast transmission type of the multicast/broadcast service in the first service area only when the quantity of terminal devices in the group corresponding to the multicast/broadcast service in the first service area is greater than or equal to the preset value. To be specific, when the quantity of terminal devices in the group corresponding to the multicast/broadcast service in the first service area is relatively small, a multi-link transmission mode may be used. When the quantity of terminal devices in the group corresponding to the multicast/broadcast service in the first service area is relatively large, a shared-link transmission mode may be used, and multicast/broadcast transmission is performed by using the determined multicast/broadcast transmission type.

In a possible implementation of the first aspect, the method further includes: The first core network element receives location information of the terminal device from a second core network element. The first core network element determines a second service area of the multicast/broadcast service based on the location information of the terminal device, where the second service area is within the first service area. The first core network element sends information about the second service area and an identifier of the multicast/broadcast service to the second core network element. In this possible implementation, a range of a service area is dynamically updated, so that the service area can better adapt to a quantity of terminal devices and distribution of the terminal devices, thereby avoiding low multicast/broadcast efficiency caused because a preset service area does not conform to actual distribution of terminal devices, and improving multicast/broadcast service transmission efficiency.

In a possible implementation of the first aspect, that a first core network element obtains a multicast/broadcast access type supported by a terminal device that is located in a first service area of a multicast/broadcast service and that belongs to a group corresponding to the multicast/broadcast service includes: The first core network element requests, from a unified data management UDM network element, the multicast/broadcast access type supported by the terminal device. The first core network element receives, from the UDM network element, the multicast/broadcast access type supported by the terminal device. In this possible implementation, the multicast/broadcast access type supported by the terminal device may be from the UDM network element, and the UDM network element may feedback one or more multicast/broadcast access types supported by the terminal device.

In a possible implementation of the first aspect, that a first core network element obtains a multicast/broadcast access type supported by a terminal device that is located in a first service area of a multicast/broadcast service and that belongs to a group corresponding to the multicast/broadcast service includes: The first core network element sends a subscription message to the second core network element, where the subscription message is used to subscribe to a multicast/broadcast access type supported by a terminal device that meets a preset condition. The first core network element receives a notification message from the second core network element, where the notification message includes the multicast/broadcast access type supported by the terminal device that meets the preset condition.

In a possible implementation of the first aspect, the subscription message includes information about the first service area, and the terminal device that meets the preset condition includes a terminal device located in the first service area. In this possible implementation, when receiving the supported multicast/broadcast access type reported by the terminal device, the second core network element does not perform determining, but directly sends, to the first core network element, the supported multicast/broadcast access type reported by the terminal device. The first core network element determines whether the terminal device belongs to the group corresponding to the multicast/broadcast service.

In a possible implementation of the first aspect, when the subscription message includes the information about the first service area, and the terminal device that meets the preset condition includes the terminal device located in the first service area, the method further includes: The first core network element obtains, based on the multicast/broadcast access type supported by the terminal device that meets the preset condition, the multicast/broadcast access type supported by the terminal device that is located in the first service area and that belongs to the group corresponding to the multicast/broadcast service.

In a possible implementation of the first aspect, the subscription message includes information about the first service area and the identifier of the multicast/broadcast service, and the terminal device that meets the preset condition includes the terminal device that is located in the first service area and that belongs to the group corresponding to the multicast/broadcast service. In this possible implementation, the second core network element determines whether the terminal device belongs to the group corresponding to the multicast/broadcast service. When the terminal device belongs to the group corresponding to the multicast/broadcast service, the second core network element sends, to the first core network element, the supported multicast/broadcast access type reported by the terminal device.

According to a second aspect, a multicast/broadcast service transmission method is provided. The method includes: A second core network element receives a subscription message from a first core network element, where the subscription message is used to subscribe to a multicast/broadcast access type supported by a terminal device that meets a preset condition. The second core network element receives, from a first terminal device, a multicast/broadcast access type supported by the first terminal device, where the first terminal device meets the preset condition. The second core network element sends a notification message to the first core network element, where the notification message includes the multicast/broadcast access type supported by the first terminal device.

According to the multicast/broadcast service transmission method provided in the second aspect, the second core network element receives, from the first core network element, the subscription message used to subscribe to the multicast/broadcast access type supported by the terminal device that meets the preset condition, receives, from the first terminal device, the multicast/broadcast access type supported by the terminal device, and notifies the first core network element of the multicast/broadcast access type supported by the first terminal device. Therefore, the second core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

In a possible implementation of the second aspect, the subscription message includes information about a first service area of a multicast/broadcast service, and the terminal device that meets the preset condition includes a terminal device located in the first service area; or the subscription message includes information about a first service area of a multicast/broadcast service and an identifier of the multicast/broadcast service, and the terminal device that meets the preset condition includes a terminal device that is located in the first service area and that belongs to a group corresponding to the multicast/broadcast service.

In a possible implementation of the second aspect, the method further includes: The second core network element receives a first request message from the first terminal device, where the first request message is used to request to register with the first terminal device. The second core network element determines, based on the first request message, that the first terminal device meets the preset condition.

In a possible implementation of the second aspect, the first request message includes the identifier of the multicast/broadcast service, and the subscription message includes the information about the first service area and the identifier of the multicast/broadcast service. That the second core network element determines, based on the first request message, that the first terminal device meets the preset condition includes: The second core network element determines, based on the identifier of the multicast/broadcast service and the fact that the first terminal device is located in the first service area, that the first terminal device meets the preset condition. In this possible implementation, the terminal device adds the identifier of the multicast/broadcast service to the first request message, so that the second core network element can determine whether the terminal device meets the preset condition, thereby saving signaling and simplifying a procedure.

In a possible implementation of the second aspect, that the second core network element receives, from a first terminal device, a multicast/broadcast access type supported by the first terminal device includes: The second core network element receives a first request message from the first terminal device, where the first request message is used to request to register with the first terminal device, and the first request message includes the multicast/broadcast access type supported by the first terminal device. In this possible implementation, the terminal device adds the supported multicast/broadcast access type to a registration request, to save signaling and simplify a procedure.

In a possible implementation of the second aspect, the method further includes: The second core network element sends information about a registration area of the first terminal device to the first terminal device, where the registration area is within the first service area, or there is no intersection between the registration area and the first service area. In this possible implementation, the registration area of the terminal device is combined with a multicast/broadcast functioning area, so that it can be ensured that the terminal device can notify the network side in time when moving out of the multicast/broadcast functioning area. When accessing a network, the terminal device notifies the network side of information about a group that the terminal device joins and a multicast/broadcast capability by using a NAS message, to help the network side collect statistics about a quantity of terminal devices.

In a possible implementation of the second aspect, the information about the registration area of the first terminal device is carried in a response message of the first request message. In this possible implementation, signaling can be saved.

In a possible implementation of the second aspect, the method further includes: The second core network element sends the information about the first service area to the first terminal device. In this possible implementation, a multicast/broadcast functioning area (the first service area) is notified to the terminal device, so that it can be ensured that the terminal device can notify the network side in time when moving out of the multicast/broadcast functioning area. When accessing a network, the terminal device notifies the network side of information about a group that the terminal device joins and a multicast/broadcast capability by using a NAS message, to help the network side collect statistics about a quantity of terminal devices.

In a possible implementation of the second aspect, the information about the first service area is carried in a response message of the first request message. In this possible implementation, signaling can be saved.

In a possible implementation of the second aspect, the method further includes: The second core network element sends location information of the first terminal device to the first core network element. The second core network element receives information about a second service area of the multicast/broadcast service and the identifier of the multicast/broadcast service from the first core network element, where the second service area is within the first service area. The second core network element sends the information about the second service area and the identifier of the multicast/broadcast service to the first terminal device.

According to a third aspect, a multicast/broadcast service transmission method is provided, including: A terminal device obtains a multicast/broadcast access type supported by the terminal device. The terminal device sends, to a second core network element, the multicast/broadcast access type supported by the terminal device.

According to the multicast/broadcast service transmission method provided in the third aspect, the terminal device reports, to the core network element, the multicast/broadcast access type supported by the terminal device, so that the core network element determines, based on the multicast/broadcast access type supported by the terminal device, a specific RAT based on which multicast/broadcast transmission is performed. Therefore, multicast/broadcast transmission can better adapt to a case in which a terminal device supports a plurality of RATs in a 5G mobile communications system, and multicast/broadcast transmission efficiency can be improved.

In a possible implementation of the third aspect, the multicast/broadcast access type supported by the terminal device is carried in a first request message, and the first request message is used to request to register with the terminal device.

In a possible implementation of the third aspect, the method further includes: The terminal device sends a first request message to the second core network element, where the first request message is used to request to register with the terminal device.

In a possible implementation of the third aspect, the first request message includes an identifier of a multicast/broadcast service corresponding to a group to which the terminal device belongs.

In a possible implementation of the third aspect, the method further includes: The terminal device receives information about a first service area of the multicast/broadcast service from the second core network element. When the terminal device moves out of the first service area, the terminal device sends the first request message to the second core network element.

According to a fourth aspect, a multicast/broadcast service transmission method is provided, including: A third core network element receives a second request message from a first core network element, where the second request message is used to request a multicast/broadcast access type supported by a terminal device that is located in a first service area of a multicast/broadcast service and that belongs to a group corresponding to the multicast/broadcast service. The third core network element sends, to the first core network element, the multicast/broadcast access type supported by the terminal device.

In a possible implementation of the fourth aspect, the second request message includes a list including the terminal device that is located in the first service area and that belongs to the group corresponding to the multicast/broadcast service.

In a possible implementation of the fourth aspect, the method further includes: The third core network element receives, from a second core network element, the multicast/broadcast access type supported by the terminal device that is located in the first service area and that belongs to the group corresponding to the multicast/broadcast service.

According to a fifth aspect, this application provides a core network element, configured to perform the method in any one of the first aspect or the possible implementations of the first aspect. Specifically, the core network element may include a module configured to perform the method in any one of the first aspect or the possible implementations of the first aspect.

According to a sixth aspect, this application provides a core network element, configured to perform the method in any one of the second aspect or the possible implementations of the second aspect. Specifically, the core network element may include a module configured to perform the method in any one of the second aspect or the possible implementations of the second aspect.

According to a seventh aspect, this application provides a terminal device, configured to perform the method in any one of the third aspect or the possible implementations of the third aspect. Specifically, the terminal device may include a module configured to perform the method in any one of the third aspect or the possible implementations of the third aspect.

According to an eighth aspect, this application provides a core network element, configured to perform the method in any one of the fourth aspect or the possible implementations of the fourth aspect. Specifically, the core network element may include a module configured to perform the method in any one of the fourth aspect or the possible implementations of the fourth aspect.

According to a ninth aspect, this application provides a core network element. The core network element includes a processor and a memory. The memory is configured to store an instruction, and the processor is configured to execute the instruction stored in the memory, so that the core network element is enabled to perform the method in any one of the first aspect or the possible implementations of the first aspect.

According to a tenth aspect, this application provides a core network element. The core network element includes a processor and a memory. The memory is configured to store an instruction, and the processor is configured to execute the instruction stored in the memory, so that the core network element is enabled to perform the method in any one of the second aspect or the possible implementations of the second aspect.

According to an eleventh aspect, this application provides a terminal device. The terminal device includes a processor and a memory. The memory is configured to store an instruction, and the processor is configured to execute the instruction stored in the memory, so that the terminal device is enabled to perform the method in any one of the third aspect or the possible implementations of the third aspect.

According to a twelfth aspect, this application provides a core network element. The core network element includes a processor and a memory. The memory is configured to store an instruction, and the processor is configured to execute the instruction stored in the memory, so that the core network element is enabled to perform the method in any one of the fourth aspect or the possible implementations of the fourth aspect.

According to a thirteenth aspect, this application provides a computer-readable storage medium. The computer-readable storage medium stores an instruction. When the instruction is run on a computer, the computer is enabled to perform the method in any one of the first aspect or the possible implementations of the first aspect.

According to a fourteenth aspect, this application provides a computer-readable storage medium. The computer-readable storage medium stores an instruction. When the instruction is run on a computer, the computer is enabled to perform the method in any one of the second aspect or the possible implementations of the second aspect.

According to a fifteenth aspect, this application provides a computer-readable storage medium. The computer-readable storage medium stores an instruction. When the instruction is run on a computer, the computer is enabled to perform the method in any one of the third aspect or the possible implementations of the third aspect.

According to a sixteenth aspect, this application provides a computer-readable storage medium. The computer-readable storage medium stores an instruction. When the instruction is run on a computer, the computer is enabled to perform the method in any one of the fourth aspect or the possible implementations of the fourth aspect.

According to a seventeenth aspect, this application provides a computer program product including an instruction. When the instruction in the computer program product is run on a computer, the computer performs the method in any one of the first aspect or the possible implementations of the first aspect.

According to an eighteenth aspect, this application provides a computer program product including an instruction. When the instruction in the computer program product is run on a computer, the computer performs the method in any one of the second aspect or the possible implementations of the second aspect.

According to a nineteenth aspect, this application provides a computer program product including an instruction. When the instruction in the computer program product is run on a computer, the computer performs the method in any one of the third aspect or the possible implementations of the third aspect.

According to a twentieth aspect, this application provides a computer program product including an instruction. When the instruction in the computer program product is run on a computer, the computer performs the method in any one of the fourth aspect or the possible implementations of the fourth aspect.

According to a twenty-first aspect, this application provides a computer chip. The computer chip enables a computer to perform the method in any one of the first aspect or the possible implementations of the first aspect.

According to a twenty-second aspect, this application provides a computer chip. The computer chip enables a computer to perform the method in any one of the second aspect or the possible implementations of the second aspect.

According to a twenty-third aspect, this application provides a computer chip. The computer chip enables a computer to perform the method in any one of the third aspect or the possible implementations of the third aspect.

According to a twenty-fourth aspect, this application provides a computer chip. The computer chip enables a computer to perform the method in any one of the fourth aspect or the possible implementations of the fourth aspect.

Effects that can be achieved in any one of the fifth to the twenty-fourth aspects or the possible implementations of the fifth to the twenty-fourth aspects are consistent with corresponding effects achieved in the first to the fourth aspects. Details are not described again.

### BRIEF DESCRIPTION OF DRAWINGS

FIG. 1 is a schematic diagram of a wireless communications system according to this application;
FIG. 2 is a schematic diagram of a point-to-multipoint service transmission scenario to which a method according to an embodiment of this application is applied;
FIG. 3 is a schematic diagram of a point-to-multipoint service transmission scenario in which a multilink transmission mode is used;
FIG. 4 is a schematic diagram of a point-to-multipoint service transmission scenario in which a shared-link transmission mode is used;
FIG. 5 is a schematic diagram of a system architecture of a 5G mobile communications system;
FIG. 6 is a schematic diagram of a system architecture of an MBMS;
FIG. 7 is a schematic diagram of a system architecture of a 5G mobile communications system using an MBMS according to an embodiment of this application;
FIG. 8 is a flowchart of a multicast/broadcast service transmission method according to an embodiment of this application;
FIG. 9 is a flowchart of another multicast/broadcast service transmission method according to an embodiment of this application;
FIG. 10 is a schematic flowchart of an MBMS transmission process;
FIG. 11 is a flowchart of still another multicast/broadcast service transmission method according to an embodiment of this application;
FIG. 12 is a flowchart of still another multicast/broadcast service transmission method according to an embodiment of this application;
FIG. 13 is a flowchart of still another multicast/broadcast service transmission method according to an embodiment of this application;
FIG. 14A and FIG. 14B are a flowchart of still another multicast/broadcast service transmission method according to an embodiment of this application;
FIG. 15A and FIG. 15B are a flowchart of still another multicast/broadcast service transmission method according to an embodiment of this application;
FIG. 16 is a schematic block diagram of a core network element according to an embodiment of this application;
FIG. 17 is a schematic block diagram of another core network element according to an embodiment of this application;
FIG. 18 is a schematic block diagram of still another core network element according to an embodiment of this application;
FIG. 19 is a schematic block diagram of still another core network element according to an embodiment of this application;
FIG. 20 is a schematic block diagram of a terminal device according to an embodiment of this application;
FIG. 21 is a schematic block diagram of another terminal device according to an embodiment of this application;
FIG. 22 is a schematic block diagram of still another core network element according to an embodiment of this application; and
FIG. 23 is a schematic block diagram of still another core network element according to an embodiment of this application.

### DESCRIPTION OF EMBODIMENTS

The following describes technical solutions in this application with reference to accompanying drawings.

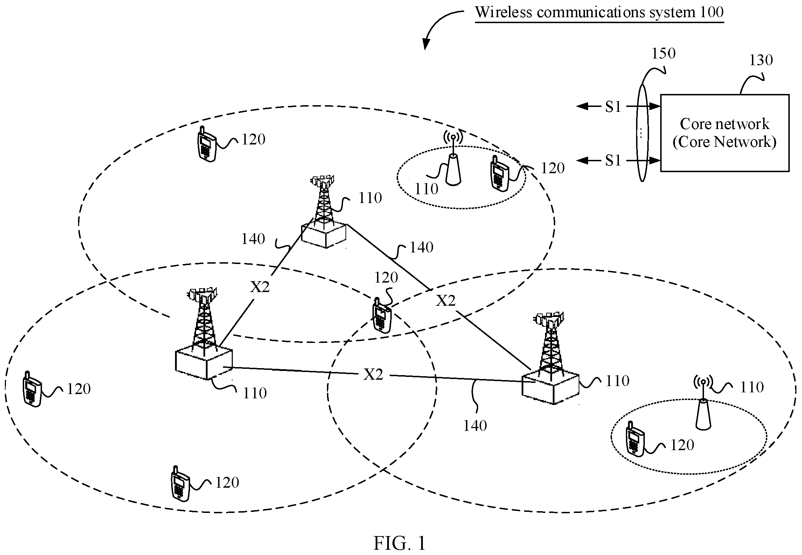

FIG. 1 is a schematic diagram of a wireless communications system 100 according to this application. The wireless communications system 100 may work on a high frequency band, and is not limited to a long term evolution (long term evolution, LTE) system. The wireless communications system 100 may alternatively be a 5G system, a machine-to-machine (machine to machine, M2M) communications system, a future evolved communications system, or the like. As shown in FIG. 1, the wireless communications system 100 may include one or more access network devices 110, one or more terminal devices 120, and a core network (core network, CN) 130.

The access network device 110 belongs to a (radio) access network ((radio) access network, (R)AN). The access network device 110 may be a base station. The base station may be configured to communicate with one or more terminal devices, or may be configured to communicate with one or more base stations having some terminal device functions (for example, communication between a macro base station and a micro base station, or communication between access points). The base station may be an evolved NodeB (evolved NodeB, eNB) in an LTE system, or a gNodeB in a 5G system. In addition, the base station may alternatively be an access point (access point, AP), a transmission node (transport point, TRP), a central unit (central unit, CU), or another network entity, and may include some or all of functions of the foregoing network entities.

The terminal device 120 may be distributed in the entire wireless communications system 100, and may be static or mobile. The terminal device 120 may be a mobile device, a mobile station (mobile station), a mobile unit (mobile unit), an M2M terminal, a wireless unit, a remote unit, a user agent, a mobile client, user equipment (user equipment, UE), or the like.

Specifically, the access network device 110 may be configured to communicate with the terminal device 120 by using one or more antennas. The access network device 110 may transmit control information or user data to the core network 130 through a backhaul (backhaul) interface 150 (for example, an S1 interface). The access network devices 110 may also directly or indirectly communicate with each other through a backhaul (backhaul) interface 140 (for example, an Xn interface).

The core network 130 includes a series of physical network elements. These network elements communicate with each other by invoking a standardized interface or service. The core network is responsible for user access and mobility management, session management, policy control, data packet forwarding, tunnel management, address management, and the like. In an LTE system, a core network may include network elements such as a mobility management entity (mobility management entity, MME), a serving gateway (serving gateway, S-GW), a packet data network gateway (packet data network gateway, PDN gateway, P-GW), and a home subscriber server (home subscriber server, HSS). In a 5G system, a core network may include an access and mobility management function (access and mobility management function, AMF) network element, a session management function (session management function, SMF) network element, a user plane function (user plane function, UPF) network element, a unified data management (unified data management, UDM) network element, and a policy control function (policy control function, PCF) network element, and the like.

The wireless communications system shown in FIG. 1 is merely intended to more clearly describe the technical solutions in this application, but constitutes no limitation on this application. A person of ordinary skill in the art may learn that, with evolution of network architectures and emergence of new service scenarios, the technical solutions provided in the embodiments of this application are also applicable to a similar technical problem.

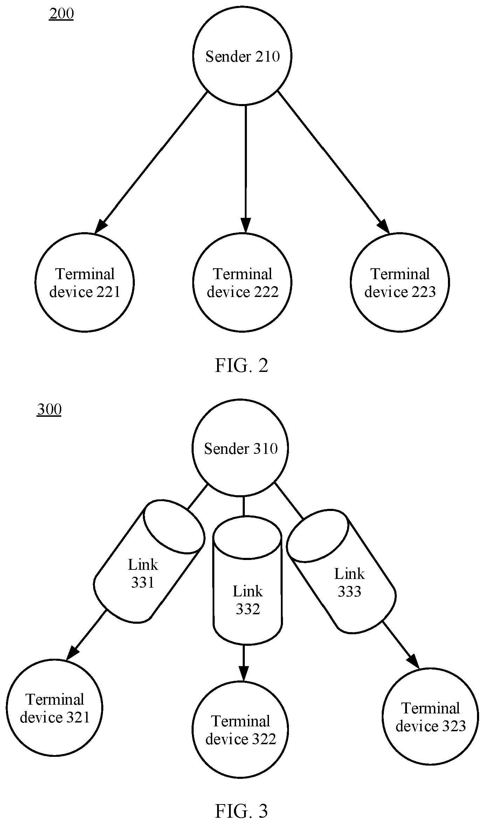

FIG. 2 is a schematic diagram of a point-to-multipoint service transmission scenario 200. As shown in FIG. 2, during point-to-multipoint service transmission, a sender 210 sends data to a plurality of terminal devices. FIG. 2 schematically shows three terminal devices: a terminal device 221, a terminal device 222, and a terminal device 223.

FIG. 3 is a schematic diagram of a point-to-multipoint service transmission scenario 300 in which a multi-link transmission mode is used. As shown in FIG. 3, during point-to-multipoint service transmission, a sender 310 establishes a plurality of transmission links to send data to a plurality of terminal devices. FIG. 3 schematically shows three terminal devices: a terminal device 321, a terminal device 322, and a terminal device 323, and three corresponding links: a link 331, a link 332, and a link 333.

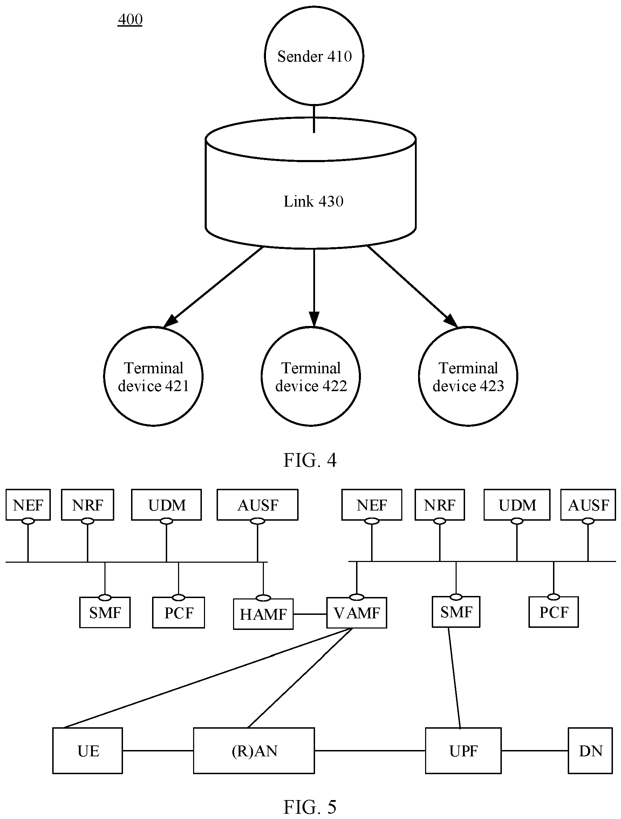

FIG. 4 is a schematic diagram of a point-to-multipoint service transmission scenario 400 in which a shared-link transmission mode is used. As shown in FIG. 4, during point-to-multipoint service transmission, a sender 410 establishes a link 430 shared by a plurality of terminal devices, to send data to the plurality of terminal devices. FIG. 4 schematically shows three terminal devices: a terminal device 421, a terminal device 422, and a terminal device 423.

The sender in each of FIG. 2 to FIG. 4 may be an access network device or a user plane function network element in a core network.

FIG. 5 is a schematic diagram of a system architecture of a 5G mobile communications system. The following describes functions of network elements in the 5G mobile communications system.

Network exposure function (network exposure function, NEF) network element: The NEF network element is a network element in an operator network, and is configured to expose data in a network to a third-party application server, or receive data provided by a third-party application server for a network.

Network repository function (network repository function, NRF) network element: The NRF network element is configured to store data in a network.

Unified data management (unified data management, UDM) network element: The UDM network element is configured to perform unified data management on data in a network. Main functions of the UDM network element include subscriber subscription data management, subscriber authentication data management, subscriber identity management, and the like.

Authentication server function (authentication server function, AUSF) network element: Main functions of the AUSF network element include user authentication and the like.

Session management function (session management function, SMF) network element: Main functions of the SMF network element include session management, internet protocol (internet protocol, IP) address assignment and management of a terminal device, user plane function selection and management, downlink data notification, and the like.

Access and mobility management function (access and mobility management function, AMF) network element: Main functions of the AMF network element include mobility management, lawful interception, access authorization/authentication, and the like.

User plane function (user plane function, UPF) network element: The UPF network element mainly provides service processing functions on a user plane, including service routing, packet forwarding, anchoring, quality of service (quality of service, QoS) processing of user plane data, uplink identifier identification and routing to a data network, downlink packet buffering, downlink data arrival notification trigger, connection to an external data network, and the like.

(R)AN: The (R)AN provides a network resource for access of a terminal device, and may be a base station in an LTE system or a 5G system. The (R)AN is responsible for radio resource management, uplink/downlink data classification and QoS application, signaling processing with a control plane network element, data forwarding to a user plane network element. It should be noted that, in the LTE system, the network element may be referred to as an eNodeB or an eNB, and in the 5G system, the (R)AN may also be referred to as a next generation radio access network (the next generation radio access network, NG-RAN). The NG-RAN may include a next generation eNodeB/eNB (next generation eNodeB/eNB, ng-eNB) and/or a gNB. The ng-eNB may support an interface in a 5G core network (that is, may be connected to the 5G core network), and an air interface technology of the ng-eNB is based on an LTE technology.

Policy control function (policy control function, PCF) network element: Main functions of the PCF network element are similar to functions of a policy and charging rules function (policy and charging rules function, PCRF) network element in the LTE system. The PCF network element obtains a subscriber subscription policy from the UDM network element and delivers the subscriber subscription policy to network elements such as the AMF network element and the SMF network element, and then the AMF network element and the SMF network element further deliver the subscriber subscription policy to the terminal device, the RAN, and the UPF.

Data network (data network, DN): The DN is a network used to transmit data, for example, the internet.

A network function (network function, NF) entity in this specification is a general description. For example, all network elements such as the AMF network element, the SMF network element, the PCF network element, and the UDM network element may be referred to as NF network elements.

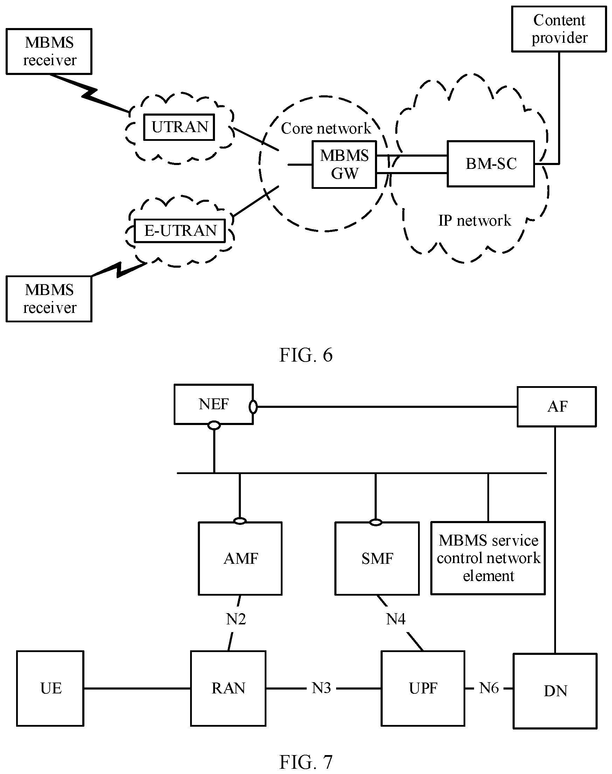

FIG. 6 is a schematic diagram of a system architecture of a multimedia broadcast multicast service (multimedia broadcast multicast service, MBMS). As shown in FIG. 6, a content provider (content provider) may be a network element or a device on a network side. An MBMS receiver (MBMS receiver) may be a terminal device. The content provider sends data to a BM-SC network element over an IP network, and then the BM-SC network element sends the data to the MBMS receiver by using an MBMS gateway (MBMS gateway, MBMS GW) in a core network over a radio access network. The radio access network may be an evolved universal terrestrial radio access network (evolved universal terrestrial radio access network, E-UTRAN) and/or a universal terrestrial radio access network (universal terrestrial radio access network, UTRAN).

FIG. 7 is a schematic diagram of a system architecture of a 5G mobile communications system using an MBMS according to an embodiment of this application.

In some embodiments, an SMF network element in FIG. 7 may implement a session management function of the BM-SC network element in the system architecture of the MBMS in FIG. 6, that is, the SMF network element in FIG. 7 may manage a multicast/broadcast transmission session. Therefore, the SMF is enhanced as a network element that can support a group-session management function (group-session management function, G-SMF). In addition, the SMF network element in FIG. 7 may further implement a control plane function (control plane function, CPF) of the BM-SC in the system architecture of the MBMS. The CPF mainly implements session management functions (for example, functions of the SMF network element) such as establishment, release, and change of a user plane transmission path of a multicast/broadcast service of a terminal device.

In some other embodiments, an SMF network element in FIG. 7 may implement service management functions of the BM-SC network element in the system architecture of the MBMS in FIG. 6, that is, a group management function, a security management function, and a service announcement function. Alternatively, these service management functions may be implemented in an independent MBMS service control (MBMS service control) network element. The MBMS service control network element is a new network function entity defined in the 5G system, and has the service management functions of the BM-SC network element.

An AMF network element in FIG. 7 may implement a function of session information transmission between the SMF network element and a RAN. It should be understood that the AMF network element herein may alternatively be a group-access and mobility management function (group-access and mobility management function, G-AMF) network element.

A UPF network element in FIG. 7 may implement a user plane function of multicast/broadcast transmission, that is, the user plane functions of the BM-SC network element and the MBMS-GW in the system architecture of the MBMS in FIG. 6.

It should be noted that, in the embodiments of this application, a first core network element may be an SMF network element or a G-SMF network element that has an MBMS function, or may be an MBMS service control network element; a second core network element may be an AMF network element or a G-AMF network element; and a third core network element may be a UDM network element. In addition, for devices such as an access network element, an AMF network element, and an MBMS service control device, refer to the descriptions in any one of the accompanying drawings in FIG. 1 to FIG. 7. This is not limited in this application.

The following provides a description by using an example in which the first core network element is the SMF network element, the second core network element is the AMF network element, and the third core network element is the UDM network element. It should be understood that this application may alternatively be based on an architecture other than the system architecture shown in FIG. 7. Each core network element may be another network element having a function similar to that of the foregoing network element. This is not limited in this application.

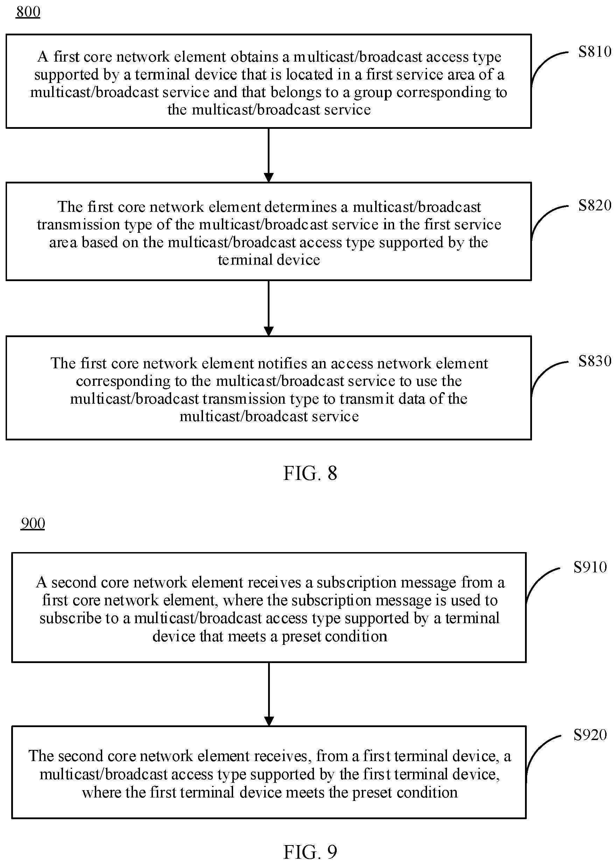

FIG. 8 is a flowchart of a multicast/broadcast service transmission method 800 according to an embodiment of this application. Details are as follows:
S810: A first core network element obtains a multicast/broadcast access type supported by a terminal device that is located in a first service area of a multicast/broadcast service and that belongs to a group corresponding to the multicast/broadcast service.

The first service area is a service area (service area, SA) corresponding to a multicast/broadcast service discussed in the embodiments of this application.

The first service area is an area in which data of the multicast/broadcast service is transmitted. Generally, one multicast/broadcast service may correspond to one service area. A specific form of the first service area may be a cell list, or may be a tracking area list.

The group corresponding to the multicast/broadcast service represents a set of terminal devices that receive the multicast/broadcast service. Generally, one multicast/broadcast service may correspond to one group, and the group may include one or more terminal devices.

In some implementation scenarios, a service area may also be referred to as a group session area. It should be noted that the service area is a geographical area, and there may be one or more terminal devices that are geographically located in the area but do not receive a multicast/broadcast service. A group is a logical concept. A terminal device that belongs to a group corresponding to a multicast/broadcast service is a terminal device that receives the multicast/broadcast service.

The multicast/broadcast transmission type includes one or more of the following: multicast/broadcast of an NR system, multicast/broadcast of a multicast/broadcast single frequency network (multicast/broadcast single frequency network, MBSFN), or multicast/broadcast of single-cell point-to-multipoint (single cell point to multipoint, SCPTM). The multicast/broadcast transmission type may further include multicast/broadcast of another type of system or another type of network. This is not limited in this application.

Further, the multicast/broadcast access type supported by the terminal device may be considered as a capability of the terminal device, and may be referred to as a multicast/broadcast access capability of the terminal device. The multicast/broadcast access type supported by the terminal device may include one or more of the following: multicast/broadcast of an NR system, multicast/broadcast of an MBSFN, or multicast/broadcast of SCPTM.

S820: The first core network element determines a multicast/broadcast transmission type of the multicast/broadcast service in the first service area based on the multicast/broadcast access type supported by the terminal device.

S830: The first core network element notifies an access network element corresponding to the multicast/broadcast service to use the multicast/broadcast transmission type to transmit data of the multicast/broadcast service.

The access network element corresponding to the multicast/broadcast service may be replaced with an access network element corresponding to the first service area.

The access network element corresponding to the multicast/broadcast service is an access network element that receives the data of the multicast/broadcast service from the core network element and that sends the data of the multicast/broadcast service to the terminal device.

The access network element corresponding to the first service area may be an access network element that provides a service for a terminal device in the first service area. The access network element may be located in the first service area, or may not be located in the first service area. This is not limited in this application.

For example, in step S830, the first core network element may send the multicast/broadcast transmission type and an identifier of the multicast/broadcast service to the access network element corresponding to the multicast/broadcast service, to notify the access network element of a multicast/broadcast service or a group to which the determined multicast/broadcast transmission type is applicable. Apparently, step S830 may be replaced with that the first core network element sends the multicast/broadcast transmission type and an identifier of the multicast/broadcast service to an access network element corresponding to the multicast/broadcast service.

The identifier of the multicast/broadcast service may be used to identify and distinguish between different multicast/broadcast services, or may be used to identify a group corresponding to a multicast/broadcast service. In some existing systems or networks, a multicast/broadcast identifier is used to identify and distinguish between multicast/broadcast services and identify a group corresponding to a multicast/broadcast service. In some other existing systems or networks, a group identifier is used to identify and distinguish between multicast/broadcast services and identify a group corresponding to a multicast/broadcast service. In the embodiments of this application, the identifier of the multicast/broadcast service may be a multicast/broadcast identifier, or may be a group identifier. The multicast/broadcast identifier indicates a transmission service of a multicast/broadcast service that is indicated by the multicast/broadcast identifier and to which the terminal device subscribes. The group identifier indicates that the terminal device belongs to the group corresponding to the multicast/broadcast service. When the terminal device exchanges signaling with the access network element or the core network element to perform multicast/broadcast transmission, the identifier of the multicast/broadcast service may be carried in the signaling. The identifier of the multicast/broadcast service may be allocated by an SMF network element and notified to an application server. The application server sends the allocation result to the terminal device at an application layer.

According to the multicast/broadcast service transmission method in this embodiment of this application, the first core network element obtains the multicast/broadcast access type supported by the terminal device in the group corresponding to the multicast/broadcast service, determines the multicast/broadcast transmission type of the multicast/broadcast service in the first service area based on the multicast/broadcast access type supported by the terminal device, and notifies the access network element. Therefore, the first core network element may determine a specific RAT based on which multicast/broadcast transmission is performed, to better adapt to a case in which a terminal device supports a plurality of RATs in a 5G mobile communications system, and improve multicast/broadcast transmission efficiency.

Optionally, in an implementation scenario of the foregoing embodiment, step S820 may include: When a quantity of terminal devices in the group corresponding to the multicast/broadcast service in the first service area is greater than or equal to a preset value, the first core network element determines the multicast/broadcast transmission type of the multicast/broadcast service in the first service area based on the multicast/broadcast access type supported by the terminal device.

The first core network element may determine a transmission mode of point-to-multipoint service transmission, for example, determine whether to use a multi-link transmission mode or a shared-link transmission mode.

For example, the first core network element may determine a relationship between a preset value and a quantity of terminal devices in the group corresponding to the multicast/broadcast service in the first service area. When the quantity of terminal devices in the group corresponding to the multicast/broadcast service in the first service area is less than (or less than or equal to) the preset value, the first core network element determines to use the multilink transmission mode (that is, in a mode of a plurality of unicast links) to perform multicast/broadcast service transmission. When the quantity of terminal devices in the group corresponding to the multicast/broadcast service in the first service area is greater than or equal to (or greater than) the preset value, the first core network element determines the multicast/broadcast transmission type of the multicast/broadcast service in the first service area based on the multicast/broadcast access type supported by the terminal device.

In an example, the first core network element selects a multicast/broadcast access type supported by a maximum quantity of terminal devices as the multicast/broadcast transmission type of the multicast/broadcast service in the first service area. For example, in terminal devices that are located in the first service area of the multicast/broadcast service and that belong to the group corresponding to the multicast/broadcast service, a largest quantity of terminal devices support multicast/broadcast of anMBSFN, the multicast/broadcast of the MBSFN is used as the multicast/broadcast transmission type of the multicast/broadcast service in the first service area.

In another example, some terminal devices use a multicast/broadcast transmission type to perform multicast/broadcast service transmission, and the some terminal devices all support a multicast/broadcast access type corresponding to the multicast/broadcast transmission type. The other terminal devices use another multicast/broadcast transmission type to perform multicast/broadcast service transmission, and the other terminal devices all support a multicast/broadcast access type corresponding to the another multicast/broadcast transmission type. For example, if some of terminal devices that are located in the first service area of the multicast/broadcast service and that belong to the group corresponding to the multicast/broadcast service support multicast/broadcast of an NR system, the some terminal devices use a multicast/broadcast transmission type of the NR system to perform multicast/broadcast service transmission. If the other terminal devices support multicast/broadcast of SCPTM, the other terminal devices use a multicast/broadcast transmission type of the SCPTM to perform multicast/broadcast service transmission.

In still another example, some terminal devices may support a plurality of multicast/broadcast access types. The first core network element may select a plurality of appropriate multicast/broadcast access types for these terminal devices based on capabilities of the terminal devices and a total quantity of the terminal devices, to perform multicast/broadcast service transmission.

Optionally, in another implementation scenario of the foregoing embodiment, the method 800 may further include: The first core network element receives location information of the terminal device from a second core network element. The first core network element determines a second service area of the multicast/broadcast service based on the location information of the terminal device, where the second service area is within the first service area. The first core network element sends information about the second service area and an identifier of the multicast/broadcast service to the second core network element.

In the embodiments of this application, information about the first service area and the information about the second service area each may be specifically a cell identifier list or a tracking area identifier list.

A process in which the first core network element determines the second service area to replace the original first service area may be understood as that the first core network element dynamically updates a range of a service area. The first core network element may determine the range of the service area based on a quantity of terminal devices that subscribe to a same multicast/broadcast service and distribution of the terminal devices. In an example, a quantity of terminal devices and distribution of the terminal devices may be determined by collecting statistics about location information of the terminal devices. The location information of the terminal device may be sent by the second core network element to the first core network element. The first core network element may obtain the location information of the terminal device through reporting by the terminal device. Certainly, the first core network element may alternatively obtain the location information of the terminal device in another manner. This is not limited in this application. The location information of the terminal device may be a cell identifier of a cell in which the terminal device is located. Certainly, the location information of the terminal device may alternatively be information in another form. This is not limited in this application.

As described above, dynamically updating the range of the service area may include determining a second service area of the multicast/broadcast service, where the second service area is within the first service area. That is, dynamically updating the range of the service area may be narrowing down a range of an existing service area, and the second service area is obtained by narrowing down the first service area. In addition, dynamically updating the range of the service area may be expanding a range of an existing service area, or selecting a new service area from a candidate set for the multicast/broadcast service. This is not limited in this application.

After dynamically updating the range of the service area, the first core network element may notify a corresponding core network element and/or a corresponding access network element, for example, a UPF and a RAN, so that the core network element and/or the access network element update the range of the service area. In an example, after determining the second service area, the first core network element may send the information about the second service area and the identifier of the multicast/broadcast service to the second core network element. Correspondingly, the second core network element receives the information about the second service area of the multicast/broadcast service and the identifier of the multicast/broadcast service from the first core network element. It should be understood that the identifier of the multicast/broadcast service is sent to indicate a multicast/broadcast service or a group to which the determined information about the second service area is applicable. The second core network element may send the information about the second service area and the identifier of the multicast/broadcast service to the terminal device. In other words, the second core network element may notify the terminal device of latest information about a service area. This process may be implemented by a service announcement (service announcement) process, and details are not described herein.

A range of a service area is dynamically updated, so that the service area can better adapt to a quantity of terminal devices and distribution of the terminal devices, thereby avoiding low multicast/broadcast efficiency caused because a preset service area does not conform to actual distribution of terminal devices, and improving multicast/broadcast service transmission efficiency.

It should be understood that the step of dynamically updating a range of a service area may not be based on steps S810 to S830, but may be an independent method for dynamically updating a range of a service area.

Optionally, in still another implementation scenario of the foregoing embodiment, step S810 may include: The first core network element requests, from a UDM network element (which may be the foregoing third core network element), the multicast/broadcast access type supported by the terminal device. The first core network element receives, from the UDM network element, the multicast/broadcast access type supported by the terminal device.

Correspondingly, the third core network element receives a request such as a second request message from the first core network element, where the second request message is used to request the multicast/broadcast access type supported by the terminal device that is located in the first service area of the multicast/broadcast service and that belongs to the group corresponding to the multicast/broadcast service. The third core network element sends, to the first core network element, the multicast/broadcast access type supported by the terminal device. In other words, the multicast/broadcast access type supported by the terminal device may be from the UDM network element.

The second request message may include a list including the terminal device that is located in the first service area and that belongs to the group corresponding to the multicast/broadcast service. It should be understood that the second request message may alternatively be used to request, by using other content, the multicast/broadcast access type supported by the terminal device. For example, the second request message is only used to request the multicast/broadcast access type supported by the terminal device, but is not used to send the list including the terminal device. The third core network element may send all found related information of multicast/broadcast access types of all terminal devices to the first core network element. The first core network element determines a multicast/broadcast access type supported by a terminal device, to determine the multicast/broadcast transmission type of the multicast/broadcast service in the first service area. A specific form of the second request message is not limited in this application.

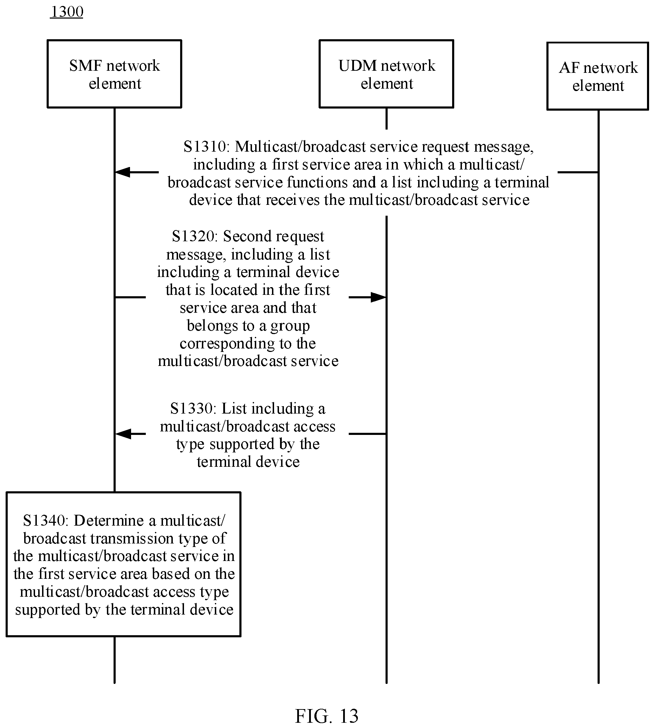

A specific example corresponding to the implementation scenario is described in detail in FIG. 13.

Optionally, in still another implementation scenario of the foregoing embodiment, step S810 may include: The first core network element sends a subscription message to the second core network element, where the subscription message is used to subscribe to a multicast/broadcast access type supported by a terminal device that meets a preset condition. The first core network element receives a notification message from the second core network element, where the notification message includes the multicast/broadcast access type supported by the terminal device that meets the preset condition. Correspondingly, the second core network element receives the subscription message from the first core network element, and the second core network element sends the notification message to the first core network element. In other words, the multicast/broadcast access type supported by the terminal device may be from the second core network element, for example, an AMF network element.

Optionally, in an example, the subscription message includes information about the first service area and the identifier of the multicast/broadcast service, and the terminal device that meets the preset condition includes the terminal device that is located in the first service area and that belongs to the group corresponding to the multicast/broadcast service. In this example, the first core network element sends the identifier of the multicast/broadcast service to the second core network element. In this way, the second core network element may determine, by using the identifier of the multicast/broadcast service, a multicast/broadcast service or a group corresponding to the multicast/broadcast service. When the second core network element receives the supported multicast/broadcast access type reported by the terminal device, the second core network element determines whether the terminal device belongs to the group corresponding to the multicast/broadcast service. When the terminal device belongs to the group corresponding to the multicast/broadcast service, the second core network element sends, to the first core network element, the supported multicast/broadcast access type reported by the terminal device.

Optionally, in another example, the subscription message includes information about the first service area, and the terminal device that meets the preset condition includes a terminal device located in the first service area. In this example, the first core network element does not send the identifier of the multicast/broadcast service to the second core network element. When receiving the supported multicast/broadcast access type reported by the terminal device, the second core network element does not perform determining, but directly sends, to the first core network element, the supported multicast/broadcast access type reported by the terminal device. The first core network element determines whether the terminal device belongs to the group corresponding to the multicast/broadcast service. To be specific, when the subscription message includes the information about the first service area, and the terminal device that meets the preset condition includes the terminal device located in the first service area, the method 800 may further include: The first core network element obtains, based on the multicast/broadcast access type supported by the terminal device that meets the preset condition, the multicast/broadcast access type supported by the terminal device that is located in the first service area and that belongs to the group corresponding to the multicast/broadcast service.

FIG. 9 is a flowchart of another multicast/broadcast service transmission method 900 according to an embodiment of this application. Details are as follows:
S910: A second core network element receives a subscription message from a first core network element, where the subscription message is used to subscribe to a multicast/broadcast access type supported by a terminal device that meets a preset condition.
S920: The second core network element receives, from a first terminal device, a multicast/broadcast access type supported by the first terminal device, where the first terminal device meets the preset condition.

It should be understood that related information of the multicast/broadcast access type supported by the terminal device in the second core network element may be from the terminal device. Correspondingly, the first terminal device obtains the multicast/broadcast access type supported by the first terminal device, and sends, to the second core network element, the multicast/broadcast access type supported by the first terminal device. The first terminal device may obtain, from a memory, the multicast/broadcast access type supported by the first terminal device.

S930: The second core network element sends a notification message to the first core network element, where the notification message includes the multicast/broadcast access type supported by the first terminal device.

According to the multicast/broadcast service transmission method in this embodiment of this application, the second core network element receives, from the first core network element, the subscription message used to subscribe to the multicast/broadcast access type supported by the terminal device that meets the preset condition, receives, from the first terminal device, the multicast/broadcast access type supported by the terminal device, and notifies the first core network element of the multicast/broadcast access type supported by the first terminal device. Therefore, the second core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the subscription message includes information about a first service area of a multicast/broadcast service, and the terminal device that meets the preset condition includes a terminal device located in the first service area; or the subscription message includes information about a first service area of a multicast/broadcast service and an identifier of the multicast/broadcast service, and the terminal device that meets the preset condition includes a terminal device that is located in the first service area and that belongs to a group corresponding to the multicast/broadcast service. The subscription message in this implementation scenario is similar to the detailed description of the subscription message in the method 800, and details are not described herein again.

Optionally, in another implementation scenario of the foregoing embodiment, the method 900 may further include: The second core network element receives a first request message from the first terminal device, where the first request message is used to request to register with the first terminal device. The second core network element determines, based on the first request message, that the first terminal device meets the preset condition. Correspondingly, the first terminal device sends the first request message to the second core network element.

In an example, the first request message includes the identifier of the multicast/broadcast service, and the subscription message includes the information about the first service area and the identifier of the multicast/broadcast service. That the second core network element determines, based on the first request message, that the first terminal device meets the preset condition may include: The second core network element determines, based on the identifier of the multicast/broadcast service and the fact that the first terminal device is located in the first service area, that the first terminal device meets the preset condition. The second core network element determines, based on the identifier of the multicast/broadcast service in the first request message, that the first terminal device belongs to the group corresponding to the multicast/broadcast service. In other words, the second core network element determines, based on the identifier of the multicast/broadcast service in the first request message, that the first terminal device has subscribed to the multicast/broadcast service.

In addition, the first terminal device may add a location of the first terminal device to the first request message, so that the second core network element can determine that the first terminal device is located in the first service area. Alternatively, the first terminal device may send the first request message to the second core network element only when determining that the first terminal device is located in the first service area. Alternatively, the access network element sends location information of the first terminal device together with the first request message to the second core network element.

Optionally, in still another implementation scenario of the foregoing embodiment, that the second core network element receives, from a first terminal device, a multicast/broadcast access type supported by the first terminal device includes: The second core network element receives a first request message from the first terminal device, where the first request message is used to request to register with the first terminal device, and the first request message includes the multicast/broadcast access type supported by the first terminal device. Specifically, when reporting the supported multicast/broadcast access type, the first terminal device may add the multicast/broadcast access type supported by the first terminal device to the first request message. In this way, signaling and resources can be saved. To be specific, the first terminal device may report, to a network side by using an existing non-access stratum (non-access stratum, NAS) procedure, the multicast/broadcast access type supported by the first terminal device, to save signaling and resources. Certainly, the first terminal device may not use the first request message to report the supported multicast/broadcast access type, but use other signaling. This is not limited in this application.

The following describes in detail the other two optional implementation scenarios of the foregoing embodiment. Before this, problems that exist in existing solutions corresponding to the two optional implementation scenarios are first described.

An existing terminal device may be in a connected mode and an idle mode. For a multi-link transmission mode (that is, a unicast transmission mode), the terminal device can receive/send data only when being in the connected mode. When the terminal device is in the idle mode, a related communications module of the terminal device is in an off mode, and therefore power consumption of the terminal device is relatively low. When the terminal device wants to send data to a network side, or when a network side wants to send unicast data to the terminal device, the terminal device needs to first enter the connected mode.

If the terminal device is in the idle mode, it means that the network side cannot learn of a location change of the terminal device in time when the terminal device changes a camping cell. In this way, when the network side needs to send data to the terminal device in the idle mode, the network side cannot page the terminal device. In an existing system, to implement coarse-grained location management on a terminal device, a concept of a registration area (registration area, RA) is proposed. When a network side needs to send downlink data to a terminal device in an idle mode, the network side needs to send a paging message only to a registration area. When the terminal device moves out of the current registration area, the terminal device needs to send a mobility-type registration request message to the network side, and the network side allocates a new registration area to the terminal device. The foregoing first request message is the registration request message.

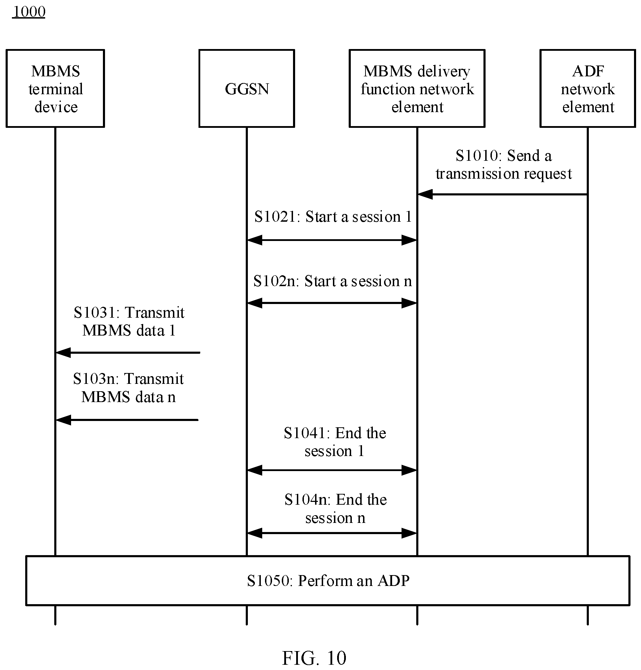

An existing transmission solution decision for point-to-multipoint service transmission is made based on an associated delivery procedure (associated delivery procedure, ADP). FIG. 10 is a flowchart of an MBMS transmission process 1000. Details are as follows:
S1010: An associated delivery function (associated delivery function, ADF) network element sends a transmission request (transmission request) to an MBMS delivery function (MBMS delivery function) network element.
S1021 to S102n: The MBMS delivery function network element and a gateway GPRS support node (gateway GPRS support node, GGSN) start sessions 1 to n (session start 1-n) respectively.
S1031 to S103n: Transmit MBMS data 1 to n (MBMS data transfer 1-n) to an MBMS terminal device.
S1041 to S104n: The MBMS delivery function network element and the GGSN end the sessions 1 to n (session stop 1-n).
S1050: Perform an ADP.

It can be learned from FIG. 10 that, after successfully sending the MBMS data (the MBMS data may be sent in a multi-link transmission mode, or may be sent in a shared-link transmission mode), the terminal device initiates the ADP. This process may be used by the terminal device to report, to an MBMS service control network element, that the terminal device uses a multicast/broadcast service, so that a BM-SC network element can determine, through statistics collection, whether to switch between a multilink transmission mode and a shared-link transmission mode. The BM-SC network element may adjust a transmission mode based on a preconfigured preset value.

The ADP is that after receiving data of the multicast/broadcast service, the terminal device sends a message to the BM-SC network element (or an F network element) to notify the BM-SC network element (or the AF network element) that the terminal device has received the data of the multicast/broadcast service. In this way, the BM-SC network element (or the AF network element) may collect statistics about a quantity of terminal devices that receive the data, to determine a to-be-used transmission solution (that is, whether a multi-link transmission mode or a shared-link transmission mode is used).

However, the foregoing process has the following problems:
First, when the terminal device is in an idle mode, the terminal device can still receive the data of the multicast/broadcast service. However, when the terminal device initiates the ADP (that is, sends data to a network side), the terminal device needs to first enter a connected mode, and the network side needs to establish an additional transmission resource for the terminal device, wasting power of the terminal device and resources of the network side.
Second, the ADP is reported only after the terminal device receives the data of the multicast/broadcast service. In this case, the network side collects statistics about the data very late (the BM-SC is triggered to perform statistics collection only after the data of the multicast/broadcast service is sent, to switch between transmission modes).

For the foregoing problems, in an implementation scenario of the embodiment corresponding to the method 900, the method 900 may further include: The second core network element receives a first request message from the first terminal device, where the first request message includes the identifier of the multicast/broadcast service, and the first request message is used to request to register with the first terminal device. The second core network element sends information about a registration area of the first terminal device to the first terminal device, where the registration area is within the first service area, or there is no intersection between the registration area and the first service area.

In this implementation scenario, the second core network element may correspondingly obtain the first service area based on the identifier of the multicast/broadcast service. When setting the registration area for the first terminal device, the second core network element considers the first service area, that is, a sending range of the multicast/broadcast service. The registration area is within the first service area, or there is no intersection between the registration area and the first service area. In this way, when the first terminal device moves out of the first service area, the second core network element may be notified in time, and the second core network element may collect statistics about a quantity of terminal devices in the first service area by using an existing registration request procedure, so that the second core network element determines a to-be-used transmission solution. Compared with the ADP in which a to-be-used transmission solution is determined only after the terminal device receives the data of the multicast/broadcast service, in this implementation scenario, as the terminal device moves out of a service area, the terminal device may report a location change status in time, so that the second core network element switches between to-be-used transmission solutions in time. In addition, this process is combined into the registration request procedure, so that power of the terminal device and resources of the network side can be saved.

Optionally, the information about the registration area of the first terminal device is carried in a response message of the first request message. Certainly, the information about the registration area may alternatively be carried in other signaling. This is not limited in this application.

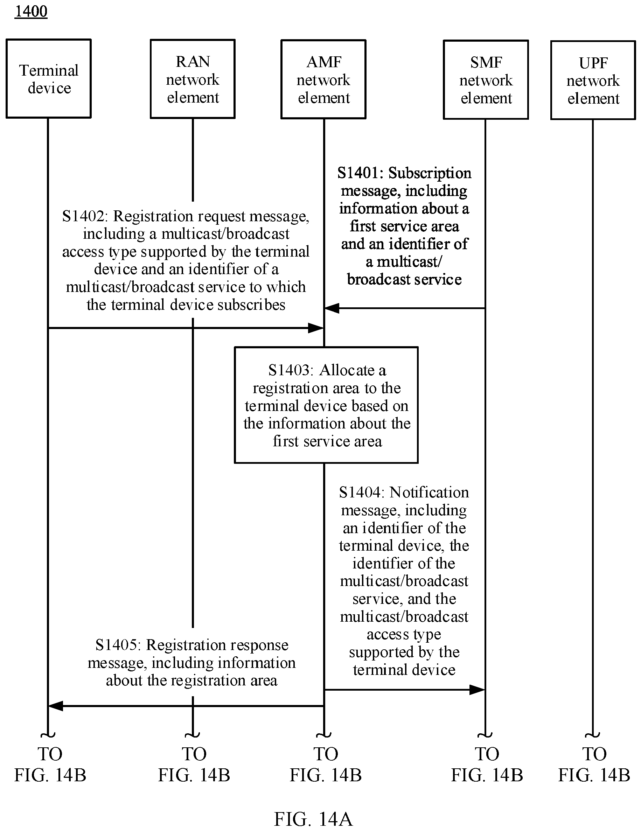

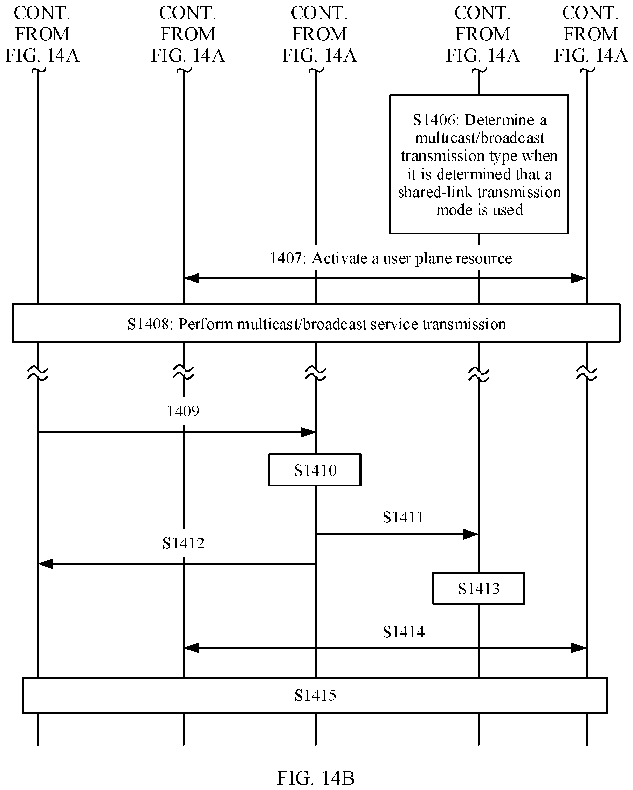

A specific example of this implementation scenario is described in detail in FIG. 14A and FIG. 14B below.

For the foregoing problems, in another implementation scenario of the embodiment corresponding to the method 900, the method 900 may further include: The second core network element sends the information about the first service area to the first terminal device. Correspondingly, the first terminal device receives the information about the first service area of the multicast/broadcast service from the second core network element.

In this implementation scenario, the second core network element sends the information about the first service area to the first terminal device, and the information about the first service area includes a sending range of the multicast/broadcast service. In this way, when the first terminal device moves out of the first service area, the first terminal device may send the first request message to the second core network element. The first terminal device notifies the second core network element by using the first request message, and the second core network element may collect statistics about a quantity of terminal devices in the first service area by using an existing registration request procedure, so that the second core network element determines a to-be-used transmission solution. Compared with the ADP in which a to-be-used transmission solution is determined only after the terminal device receives the data of the multicast/broadcast service, in this implementation scenario, as the terminal device moves out of the first service area, the terminal device may report a location change status in time, so that the second core network element switches between to-be-used transmission solutions in time. In addition, this process is combined into the registration request procedure, so that power of the terminal device and resources of the network side can be saved.

Optionally, the information about the first service area is carried in a response message of the first request message, to reduce signaling overheads. Certainly, the information about the first service area may alternatively be carried in other signaling, or the information about the first service area may be sent individually. This is not limited in this application.

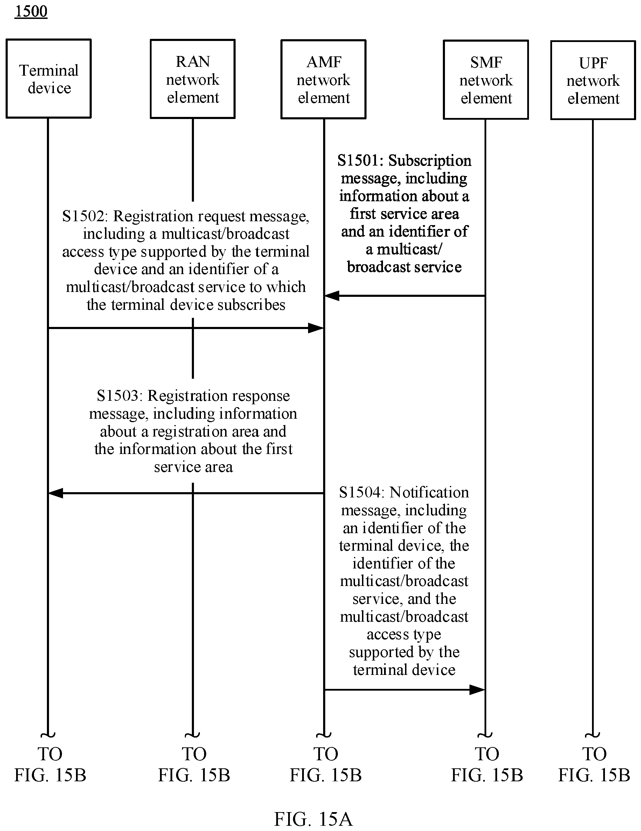

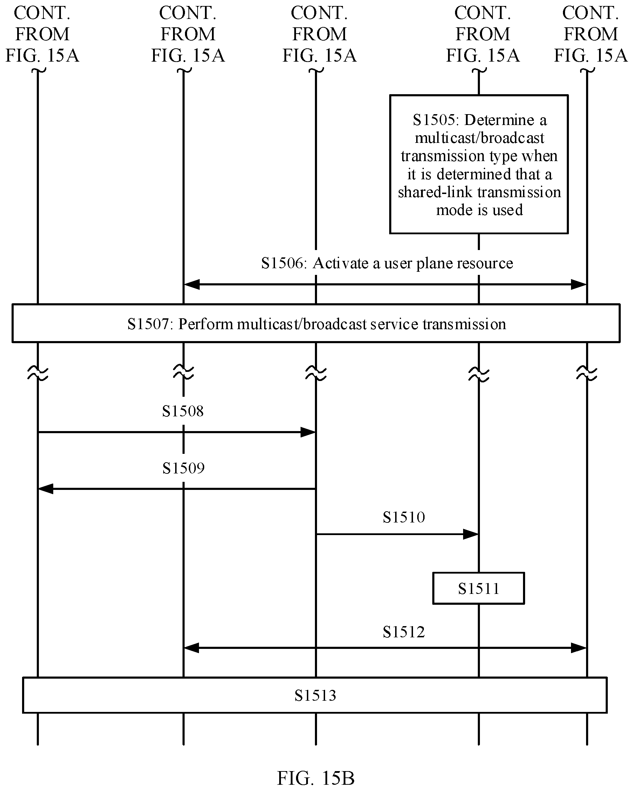

A specific example of this implementation scenario is described in detail in FIG. 15A and FIG. 15B below.

Optionally, in still another implementation scenario of the foregoing embodiment, the method 900 may further include: The second core network element sends location information of the first terminal device to the first core network element. The second core network element receives information about a second service area of the multicast/broadcast service and the identifier of the multicast/broadcast service from the first core network element, where the second service area is within the first service area. The second core network element sends the information about the second service area and the identifier of the multicast/broadcast service to the first terminal device. In this implementation scenario, an operation performed by the second core network element in a process of dynamically updating a range of a service area corresponds to the operation performed by the second core network element in the process of dynamically updating the range of the service area described in the method 800 in detail, and details are not described herein again.

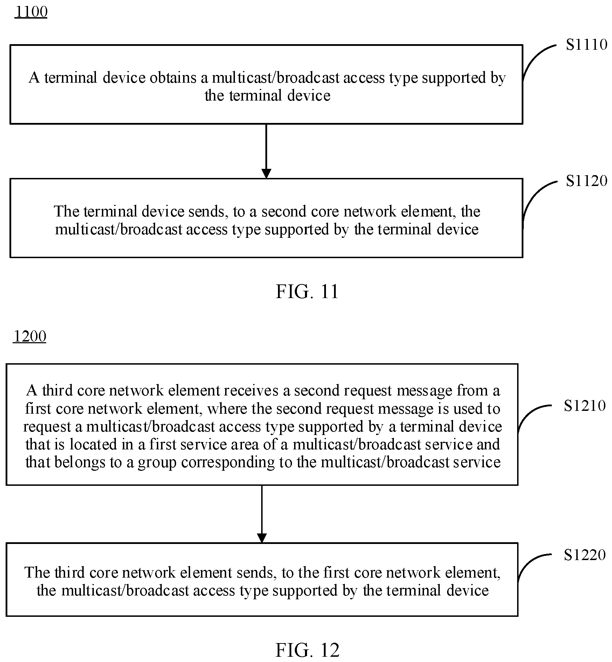

FIG. 11 is a flowchart of still another multicast/broadcast service transmission method 1100 according to an embodiment of this application. Details are as follows:
S1110: A terminal device obtains a multicast/broadcast access type supported by the terminal device.

The multicast/broadcast access type supported by the terminal device may be obtained from a memory.

S1120: The terminal device sends, to a second core network element, the multicast/broadcast access type supported by the terminal device.

According to the multicast/broadcast service transmission method in this embodiment of this application, the terminal device reports, to the core network element, the multicast/broadcast access type supported by the terminal device, so that the core network element determines, based on the multicast/broadcast access type supported by the terminal device, a specific RAT based on which multicast/broadcast transmission is performed. Therefore, multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the multicast/broadcast access type supported by the terminal device is carried in a first request message, and the first request message is used to request to register with the terminal device.

Optionally, in another implementation scenario of the foregoing embodiment, the method 1100 may further include: The terminal device sends a first request message to the second core network element, where the first request message is used to request to register with the terminal device.

Optionally, in still another implementation scenario of the foregoing embodiment, the first request message may include an identifier of a multicast/broadcast service corresponding to a group to which the terminal device belongs.

Optionally, in still another implementation scenario of the foregoing embodiment, the method 1100 may further include: The terminal device receives information about a first service area of the multicast/broadcast service from the second core network element. When the terminal device moves out of the first service area, the terminal device sends the first request message to the second core network element.

In this embodiment, an operation performed by the terminal device corresponds to the operation performed by the terminal device in the method 900, and details are not described herein again.

FIG. 12 is a flowchart of still another multicast/broadcast service transmission method 1200 according to an embodiment of this application. Details are as follows:
S1210: A third core network element receives a second request message from a first core network element, where the second request message is used to request a multicast/broadcast access type supported by a terminal device that is located in a first service area of a multicast/broadcast service and that belongs to a group corresponding to the multicast/broadcast service.
S1220: The third core network element sends, to the first core network element, the multicast/broadcast access type supported by the terminal device.

According to the multicast/broadcast service transmission method in this embodiment of this application, the third core network element receives, from the first core network element, the second request message used to request the multicast/broadcast access type supported by the terminal device, and sends, to the first core network element, the multicast/broadcast access type supported by the terminal device. Therefore, the second core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the second request message includes a list including the terminal device that is located in the first service area and that belongs to the group corresponding to the multicast/broadcast service.

Optionally, in another implementation scenario of the foregoing embodiment, the method 1200 may further include: The third core network element receives, from a second core network element, the multicast/broadcast access type supported by the terminal device that is located in the first service area and that belongs to the group corresponding to the multicast/broadcast service.

That is, related information of the multicast broadcast access type supported by the terminal device in the third core network element may be from the second core network element. Certainly, the third core network element may obtain, by using another method or from another device, the multicast/broadcast access type supported by the terminal device. This is not limited in this application.

The following describes still another multicast/broadcast service transmission method 1300 according to an embodiment of this application by using a specific example. FIG. 13 is a flowchart of still another multicast/broadcast service transmission method 1300 according to an embodiment of this application. The method 1300 is applicable to the following scenario: An AF network element knows a list including a terminal device that subscribes to a multicast/broadcast service, and knows that data needs to be sent to a first service area (the first service area does not change with a location of the terminal device). In this case, a first core network element (for example, an SMF network element) only needs to determine a multicast/broadcast transmission type used to send data of the multicast/broadcast service to the first service area. The method 1300 is implemented through participation of a third core network element (for example, a UDM network element).

As shown in FIG. 13, the multicast/broadcast service transmission method 1300 may include the following steps.

S1310: The AF network element sends a multicast/broadcast service request message to the SMF network element.

The multicast/broadcast service request message includes a first service area in which a multicast/broadcast service functions and a list including a terminal device that receives the multicast/broadcast service.

S1320: The SMF network element sends a second request message to the UDM network element.

Correspondingly, the UDM network element receives the second request message sent by the SMF network element.

The second request message includes a list including a terminal device that is located in the first service area and that belongs to a group corresponding to the multicast/broadcast service.

Step S1320 may correspond to step S1210 in the method 1200 in the foregoing embodiment.

S1330: The UDM network element sends, to the SMF network element, a list including a multicast/broadcast access type supported by the terminal device.

Correspondingly, the SMF network element receives the list that includes the multicast/broadcast access type supported by the terminal device and that is sent by the UDM network element.

Step S1330 may correspond to step S810 in the method 800 in the foregoing embodiment and step S1220 in the method 1200 in the foregoing embodiment.

The UDM network element may search local subscription data for the list that includes the multicast/broadcast access type supported by the terminal device and that correspond to the list including the terminal device.

S1340: The SMF network element determines a multicast/broadcast transmission type of the multicast/broadcast service in the first service area based on the multicast/broadcast access type supported by the terminal device.

Step S1340 may correspond to step S820 in the method 800 in the foregoing embodiment.

Then, the SMF network element may send, to an access network element corresponding to the multicast/broadcast service, the multicast/broadcast transmission type and an identifier of the multicast/broadcast service. Details are not described herein. In addition, the SMF network element may further update a service area. Details are not described herein.

FIG. 14A and FIG. 14B are a flowchart of still another multicast/broadcast service transmission method 1400 according to an embodiment of this application. As shown in FIG. 14A and FIG. 14B, the method 1400 includes the following steps.

S1401: An SMF network element sends a subscription message to an AMF network element.

The subscription message includes information about a first service area and an identifier of a multicast/broadcast service.

The identifier of the multicast/broadcast service may be a group identifier (group ID) or a multicast/broadcast identifier. The subscription message is not specific to a terminal device, but is specific to all terminal devices that are located in the first service area and that belong to a group corresponding to the multicast/broadcast service (which is identified by using the identifier of the multicast/broadcast service).

Correspondingly, the AMF network element receives the subscription message sent by the SMF network element.

Step S1401 may correspond to step S910 in the method 900 in the foregoing embodiment.

S1402: When the terminal device accesses a network, the terminal device sends a registration request (registration request) message (which is a NAS message) to the AMF network element.

The registration request message includes a multicast/broadcast access type supported by the terminal device and an identifier of a multicast/broadcast service to which the terminal device subscribes.

For example, the AMF network element may learn of, by using the identifier of the multicast/broadcast service, a multicast/broadcast service that the terminal device joins. In other words, the AMF network element may find, by using the identifier of the multicast/broadcast service that is provided by the terminal device, a service area corresponding to the identifier of the multicast/broadcast service, that is, the first service area.

In addition, the AMF network element may store the identifier of the multicast/broadcast service of the terminal device and the multicast/broadcast access type supported by the terminal device, to facilitate use in a subsequent step (for example, step S1404).

Correspondingly, the AMF network element receives the registration request message sent by the terminal device. The registration request message may be considered as a first request message.

Step S1402 may correspond to step S920 in the method 900 in the foregoing embodiment and step S1120 in the method 1100 in the foregoing embodiment.

S1403: The AMF network element allocates a registration area to the terminal device based on the information about the first service area.

A specific implementation process of S1403 may be a or b below:
a. The registration area allocated by the AMF network element to the terminal device is within the first service area.
b. There is no intersection between the registration area allocated by the AMF network element to the terminal device and the first service area.

S1404: The AMF network element sends a notification message to the SMF network element.

The notification message is used to notify the SMF network element that the terminal device joins the multicast/broadcast service in an area (that is, the first service area) in which the multicast/broadcast service functions, so that the SMF network element subsequently determines a transmission type of the multicast/broadcast service and triggers activation of a corresponding user plane resource.

The notification message may include an identifier of the terminal device, the identifier of the multicast/broadcast service, and the multicast/broadcast access type supported by the terminal device.

Correspondingly, the SMF network element receives the notification message sent by the AMF network element.

Step S1404 may correspond to step S930 in the method 900 in the foregoing embodiment.

S1405: The AMF network element sends a registration response message to the terminal device.

The registration response message may be a response message of the registration request message, and is also referred to as a registration accept message.

The registration response message includes information about the registration area allocated in S1403.

Correspondingly, the terminal device receives the registration response message sent by the AMF network element.

S1406: After receiving the notification message sent by the AMF network element in S1404, the SMF network element determines a multicast/broadcast transmission type when the SMF network element determines to use a shared-link transmission mode.

For example, a manner of performing the foregoing determining may be: determining a relationship between a preset value and a quantity of terminal devices in the group corresponding to the multicast/broadcast service in the first service area.

When the quantity of terminal devices in the group corresponding to the multicast/broadcast service in the first service area is greater than or equal to (or greater than) the preset value, the SMF network element determines the multicast/broadcast transmission type of the multicast/broadcast service in the first service area based on the multicast/broadcast access type supported by the terminal device. For example, the multicast/broadcast transmission type is one or more of the following: multicast/broadcast of an NR system, multicast/broadcast of an MBSFN, or multicast/broadcast of SCPTM.

Step S1406 may correspond to step S820 in the method 800 in the foregoing embodiment.

S1407: The SMF network element triggers a UPF network element and a RAN network element to activate a user plane resource corresponding to the multicast/broadcast transmission type determined in S1406.

Step S1407 may correspond to step S830 in the method 800 in the foregoing embodiment.

S1408: Perform multicast/broadcast service transmission after the user plane resource is established.

For example, the RAN network element may send the data of the multicast/broadcast service to the terminal device by using the established user plane resource.

S1403 and S1405 may be performed at the same time as S1404 and S1406 to S1408.

When the terminal device moves out of the current registration area, a mobility-type registration request process is triggered, and S1409 to S1415 are performed. This is similar to S1402 to S1408, and details are not described again.

In this embodiment, the registration area of the terminal device is combined with the multicast/broadcast functioning area, so that it can be ensured that the terminal device can notify the network side in time when moving out of the multicast/broadcast functioning area. When accessing the network, the terminal device notifies the network side of information about a group that the terminal device joins and a multicast/broadcast capability by using the NAS message, to help the network side collect statistics about a quantity of terminal devices.

FIG. 15A and FIG. 15B are a schematic flowchart of still another multicast/broadcast service transmission method 1500 according to an embodiment of this application. As shown in FIG. 15A and FIG. 15B, the method 1500 includes the following steps.

S1501: An SMF network element sends a subscription message to an AMF network element.

The subscription message includes information about a first service area and an identifier of a multicast/broadcast service.

The identifier of the multicast/broadcast service may be a group identifier (group ID) or a multicast/broadcast identifier. The subscription message is not specific to a terminal device, but is specific to all terminal devices that are located in the first service area and that belong to a group corresponding to the multicast/broadcast service (which is identified by using the identifier of the multicast/broadcast service).

Correspondingly, the AMF network element receives the subscription message sent by the SMF network element.

Step S1501 may correspond to step S910 in the method 900 in the foregoing embodiment.

S1502: When the terminal device accesses a network, the terminal device sends a registration request message to the AMF network element.

The registration request message includes a multicast/broadcast access type supported by the terminal device and an identifier of a multicast/broadcast service to which the terminal device subscribes.

For example, the AMF network element may learn of, by using the identifier of the multicast/broadcast service, a multicast/broadcast service that the terminal device joins. In other words, the AMF network element may find, by using the identifier of the multicast/broadcast service that is provided by the terminal device, a service area corresponding to the identifier of the multicast/broadcast service, that is, the first service area.

In addition, the AMF network element may store the identifier of the multicast/broadcast service of the terminal device and the multicast/broadcast access type supported by the terminal device, to facilitate use in a subsequent step (for example, step S1504).

Correspondingly, the AMF network element receives the registration request message sent by the terminal device. The registration request message may be considered as a first request message.

Step S1502 may correspond to step S920 in the method 900 in the foregoing embodiment and step S1120 in the method 1100 in the foregoing embodiment.

S1503: The AMF network element sends a registration response message to the terminal device.

The registration response message is a response message of the registration request message, and is also referred to as a registration accept message.

In addition, the registration response message includes information about a registration area, and further includes information about the first service area, that is, information about an area in which the multicast/broadcast service functions.

Correspondingly, the terminal device receives the registration response message sent by the AMF network element.

S1504: The AMF network element sends a notification message to the SMF network element.

The notification message is used to notify the SMF network element that the terminal device joins the multicast/broadcast service in the area (that is, the first service area) in which the multicast/broadcast service functions, so that the SMF network element subsequently determines a transmission type of the multicast/broadcast service and triggers activation of a corresponding user plane resource.

The notification message may include an identifier of the terminal device, the identifier of a multicast/broadcast service, and the multicast/broadcast access type supported by the terminal device.

Correspondingly, the SMF network element receives the notification message sent by the AMF network element.

Step S1504 may correspond to step S930 in the method 900 in the foregoing embodiment.

S1505: After receiving the notification message sent by the AMF network element in S1204, the SMF network element determines a multicast/broadcast transmission type when the SMF network element determines to use a shared-link transmission mode.

For example, the transmission mode is a multi-link transmission mode or a shared-link transmission mode.

For example, a manner of performing the foregoing determining may be: determining a relationship between a preset value and a quantity of terminal devices in the group corresponding to the multicast/broadcast service in the first service area.

When the quantity of terminal devices in the group corresponding to the multicast/broadcast service in the first service area is greater than or equal to (or greater than) the preset value, the SMF network element determines the multicast/broadcast transmission type of the multicast/broadcast service in the first service area based on the multicast/broadcast access type supported by the terminal device. For example, the multicast/broadcast transmission type is one or more of the following: multicast/broadcast of an NR system, multicast/broadcast of an MBSFN, or multicast/broadcast of SCPTM.

Step S1505 may correspond to step S820 in the method 800 in the foregoing embodiment.

S1506: The SMF network element triggers a UPF network element and a RAN network element to activate a user plane resource corresponding to the multicast/broadcast transmission type determined in S1505.

Step S1506 may correspond to step S830 in the method 800 in the foregoing embodiment.

S1507: Perform multicast/broadcast service transmission after the user plane resource is established.

For example, the RAN network element may send the data of the multicast/broadcast service to the terminal device by using the established user plane resource.

S1503 may be performed at the same time as S1504 to S1507.

When the terminal device moves out of the current first service area, a mobility-type (moving out of the current service area) registration request process is triggered, and S1508 to S1513 are performed. This is similar to S1502 to S1507, and details are not described again.

Compared with the method 1400, in the method 1500, the AMF network element no longer sets the registration area based on the first service area, but directly sends the information about the first service area to the terminal device. When the terminal device moves out of the current first service area, the mobility-type (moving out of the current service area) registration request process is triggered.

In this embodiment, the multicast/broadcast functioning area (the first service area) is notified to the terminal device, so that it can be ensured that the terminal device can notify the network side in time when moving out of the multicast/broadcast action area. When accessing the network, the terminal device notifies the network side of information about a group that the terminal device joins and a multicast/broadcast capability by using the NAS message, to help the network side collect statistics about a quantity of terminal devices.

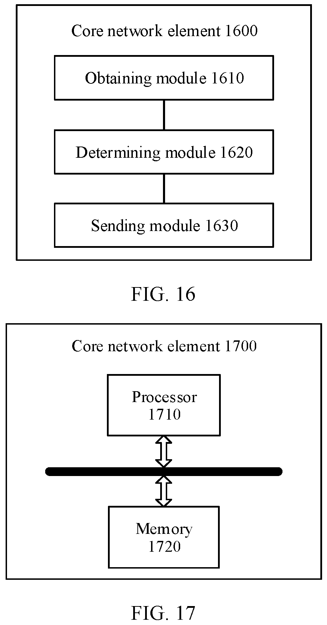

The foregoing describes in detail the multicast/broadcast service transmission method in this application with reference to FIG. 1 to FIG. 15A and FIG. 15B. The following describes in detail a core network element and a terminal device in this application with reference to FIG. 16 to FIG. 23.

FIG. 16 is a schematic block diagram of a core network element 1600 according to an embodiment of this application. As shown in FIG. 16, the core network element 1600 may include:
an obtaining module 1610, configured to obtain a multicast/broadcast access type supported by a terminal device that is located in a first service area of a multicast/broadcast service and that belongs to a group corresponding to the multicast/broadcast service;
a determining module 1620, configured to determine a multicast/broadcast transmission type of the multicast/broadcast service in the first service area based on the multicast/broadcast access type supported by the terminal device; and
a sending module 1630, configured to notify an access network element corresponding to the multicast/broadcast service to use the multicast/broadcast transmission type to transmit data of the multicast/broadcast service.

The core network element in this embodiment of this application obtains the multicast/broadcast access type supported by the terminal device in the group corresponding to the multicast/broadcast service, determines the multicast/broadcast transmission type of the multicast/broadcast service in the first service area based on the multicast/broadcast access type supported by the terminal device, and notifies the access network element. Therefore, the core network element may determine a specific RAT based on which multicast/broadcast transmission is performed, to better adapt to a case in which a terminal device supports a plurality of RATs in a 5G mobile communications system, and improve multicast/broadcast transmission efficiency.

Optionally, in an implementation scenario of the foregoing embodiment, the determining module 1620 may be specifically configured to: when a quantity of terminal devices in the group corresponding to the multicast/broadcast service in the first service area is greater than or equal to a preset value, determine the multicast/broadcast transmission type of the multicast/broadcast service in the first service area based on the multicast/broadcast access type supported by the terminal device.

Optionally, in an implementation scenario of the foregoing embodiment, the obtaining module 1610 may be further configured to receive location information of the terminal device from a second core network element. The determining module 1620 may be further configured to determine a second service area of the multicast/broadcast service based on the location information of the terminal device, where the second service area is within the first service area. The sending module 1630 may be further configured to send information about the second service area and an identifier of the multicast/broadcast service to the second core network element.

Optionally, in an implementation scenario of the foregoing embodiment, the sending module 1630 may be further configured to request, from a unified data management UDM network element, the multicast/broadcast access type supported by the terminal device. The obtaining module 1610 may be specifically configured to receive, from the UDM network element, the multicast/broadcast access type supported by the terminal device.

Optionally, in an implementation scenario of the foregoing embodiment, the sending module 1630 may be further configured to send a subscription message to the second core network element, where the subscription message is used to subscribe to a multicast/broadcast access type supported by a terminal device that meets a preset condition. The obtaining module 1610 may be specifically configured to receive a notification message from the second core network element, where the notification message includes the multicast/broadcast access type supported by the terminal device that meets the preset condition.

Optionally, in an implementation scenario of the foregoing embodiment, the subscription message includes information about the first service area, and the terminal device that meets the preset condition includes a terminal device located in the first service area; or the subscription message includes information about the first service area and the identifier of the multicast/broadcast service, and the terminal device that meets the preset condition includes the terminal device that is located in the first service area and that belongs to the group corresponding to the multicast/broadcast service.

Optionally, in an implementation scenario of the foregoing embodiment, when the subscription message includes the information about the first service area, and the terminal device that meets the preset condition includes the terminal device located in the first service area, the obtaining module 1610 may be further configured to obtain, based on the multicast/broadcast access type supported by the terminal device that meets the preset condition, the multicast/broadcast access type supported by the terminal device that is located in the first service area and that belongs to the group corresponding to the multicast/broadcast service.

FIG. 17 is a schematic block diagram of another core network element 1700 according to an embodiment of this application. As shown in FIG. 17, the core network element 1700 may include a processor 1710 and a memory 1720. The memory 1720 stores a computer instruction. When the processor 1710 executes the computer instruction, the core network element 1700 is enabled to perform the following steps: obtaining a multicast/broadcast access type supported by a terminal device that is located in a first service area of a multicast/broadcast service and that belongs to a group corresponding to the multicast/broadcast service; determining a multicast/broadcast transmission type of the multicast/broadcast service in the first service area based on the multicast/broadcast access type supported by the terminal device; and notifying an access network element corresponding to the multicast/broadcast service to use the multicast/broadcast transmission type to transmit the data of the multicast/broadcast service.

The core network element in this embodiment of this application obtains the multicast/broadcast access type supported by the terminal device in the group corresponding to the multicast/broadcast service, determines the multicast/broadcast transmission type of the multicast/broadcast service in the first service area based on the multicast/broadcast access type supported by the terminal device, and notifies the access network element. Therefore, the core network element may determine a specific RAT based on which multicast/broadcast transmission is performed, to better adapt to a case in which a terminal device supports a plurality of RATs in a 5G mobile communications system, and improve multicast/broadcast transmission efficiency.

Optionally, in an implementation scenario of the foregoing embodiment, the processor 1710 executes the computer instruction, so that the core network element 1700 is enabled to specifically perform the following step: when a quantity of terminal devices in the group corresponding to the multicast/broadcast service in the first service area is greater than or equal to a preset value, determining the multicast/broadcast transmission type of the multicast/broadcast service in the first service area based on the multicast/broadcast access type supported by the terminal device.

Optionally, in an implementation scenario of the foregoing embodiment, the processor 1710 is further configured to execute the computer instruction, so that the core network element 1700 is enabled to further perform the following steps: receiving location information of the terminal device from a second core network element; determining a second service area of the multicast/broadcast service based on the location information of the terminal device, where the second service area is within the first service area; and sending information about the second service area and an identifier of the multicast/broadcast service to the second core network element.

Optionally, in an implementation scenario of the foregoing embodiment, the processor 1710 executes the computer instruction, so that the core network element 1700 is enabled to specifically perform the following steps: requesting, from a unified data management UDM network element, the multicast/broadcast access type supported by the terminal device; and receiving, from the UDM network element, the multicast/broadcast access type supported by the terminal device.

Optionally, in an implementation scenario of the foregoing embodiment, the processor 1710 executes the computer instruction, so that the core network element 1700 is enabled to specifically perform the following steps: sending a subscription message to the second core network element, where the subscription message is used to subscribe to a multicast/broadcast access type supported by a terminal device that meets a preset condition; and receiving a notification message from the second core network element, where the notification message includes the multicast/broadcast access type supported by the terminal device that meets the preset condition.

Optionally, in an implementation scenario of the foregoing embodiment, the subscription message includes information about the first service area, and the terminal device that meets the preset condition includes a terminal device located in the first service area; or the subscription message includes information about the first service area and the identifier of the multicast/broadcast service, and the terminal device that meets the preset condition includes the terminal device that is located in the first service area and that belongs to the group corresponding to the multicast/broadcast service.

Optionally, in an implementation scenario of the foregoing embodiment, when the subscription message includes the information about the first service area, and the terminal device that meets the preset condition includes the terminal device located in the first service area, the processor 1710 is further configured to execute the computer instruction, so that the core network element 1700 is enabled to further perform the following step: obtaining, based on the multicast/broadcast access type supported by the terminal device that meets the preset condition, the multicast/broadcast access type supported by the terminal device that is located in the first service area and that belongs to the group corresponding to the multicast/broadcast service.

Optionally, the core network element 1700 may further include a transceiver, configured to receive (obtain) or send data.

It should be understood that the core network element 1600 shown in FIG. 16 or the core network element 1700 shown in FIG. 17 may be configured to perform operations or procedures of the first core network element in the foregoing method embodiments, and operations and/or functions of the modules and the components in the core network element 1600 or the core network element 1700 are used to implement corresponding procedures of the first core network element in the foregoing method embodiments. For brevity, details are not described herein again.

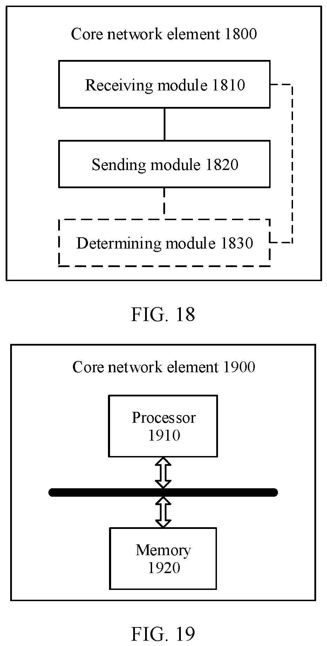

FIG. 18 is a schematic block diagram of still another core network element 1800 according to an embodiment of this application. As shown in FIG. 18, the core network element 1800 may include:
a receiving module 1810, configured to receive a subscription message from a first core network element, where the subscription message is used to subscribe to a multicast/broadcast access type supported by a terminal device that meets a preset condition, where
the receiving module 1810 is further configured to receive, from a first terminal device, a multicast/broadcast access type supported by the first terminal device, where the first terminal device meets the preset condition; and
a sending module 1820, configured to send a notification message to the first core network element, where the notification message includes the multicast/broadcast access type supported by the first terminal device.

The core network element in this embodiment of this application receives, from the first core network element, the subscription message used to subscribe to the multicast/broadcast access type supported by the terminal device that meets the preset condition, receives, from the first terminal device, the multicast/broadcast access type supported by the terminal device, and notifies the first core network element of the multicast/broadcast access type supported by the first terminal device. Therefore, the core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the subscription message includes information about a first service area of a multicast/broadcast service, and the terminal device that meets the preset condition includes a terminal device located in the first service area; or the subscription message includes information about a first service area of a multicast/broadcast service and an identifier of the multicast/broadcast service, and the terminal device that meets the preset condition includes a terminal device that is located in the first service area and that belongs to a group corresponding to the multicast/broadcast service.

Optionally, in an implementation scenario of the foregoing embodiment, the receiving module 1810 may be further configured to receive a first request message from the first terminal device, where the first request message is used to request to register with the first terminal device. The core network element 1800 may further include a determining module 1830, configured to determine, based on the first request message, that the first terminal device meets the preset condition.

Optionally, in an implementation scenario of the foregoing embodiment, the first request message includes the identifier of the multicast/broadcast service, and the subscription message includes the information about the first service area and the identifier of the multicast/broadcast service. The determining module 1930 may be specifically configured to determine, based on the identifier of the multicast/broadcast service and the fact that the first terminal device is located in the first service area, that the first terminal device meets the preset condition.

Optionally, in an implementation scenario of the foregoing embodiment, the receiving module 1810 may be specifically configured to receive a first request message from the first terminal device, where the first request message is used to request to register with the first terminal device, and the first request message includes the multicast/broadcast access type supported by the first terminal device.

Optionally, in an implementation scenario of the foregoing embodiment, the sending module 1820 may be further configured to send information about a registration area of the first terminal device to the first terminal device, where the registration area is within the first service area, or there is no intersection between the registration area and the first service area.

Optionally, in an implementation scenario of the foregoing embodiment, the information about the registration area of the first terminal device is carried in a response message of the first request message.

Optionally, in an implementation scenario of the foregoing embodiment, the sending module 1820 may be further configured to send the information about the first service area to the first terminal device.

Optionally, in an implementation scenario of the foregoing embodiment, the information about the first service area is carried in a response message of the first request message.

Optionally, in an implementation scenario of the foregoing embodiment, the sending module 1820 may be further configured to send location information of the first terminal device to the first core network element. The receiving module 1810 may be further configured to receive information about a second service area of the multicast/broadcast service and the identifier of the multicast/broadcast service from the first core network element, where the second service area is within the first service area. The sending module 1820 may be further configured to send the information about the second service area and the identifier of the multicast/broadcast service to the first terminal device.

FIG. 19 is a schematic block diagram of still another core network element 1900 according to an embodiment of this application. As shown in FIG. 19, the core network element 1900 may include a processor 1910 and a memory 1920. The memory 1920 stores a computer instruction. When the processor 1910 executes the computer instruction, the core network element 1900 is enabled to perform the following steps: receiving a subscription message from a first core network element, where the subscription message is used to subscribe to a multicast/broadcast access type supported by a terminal device that meets a preset condition; receiving, from a first terminal device, a multicast/broadcast access type supported by the first terminal device, where the first terminal device meets the preset condition; and sending a notification message to the first core network element, where the notification message includes the multicast/broadcast access type supported by the first terminal device.

The core network element in this embodiment of this application receives, from the first core network element, the subscription message used to subscribe to the multicast/broadcast access type supported by the terminal device that meets the preset condition, receives, from the first terminal device, the multicast/broadcast access type supported by the terminal device, and notifies the first core network element of the multicast/broadcast access type supported by the first terminal device. Therefore, the core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the subscription message includes information about a first service area of a multicast/broadcast service, and the terminal device that meets the preset condition includes a terminal device located in the first service area; or the subscription message includes information about a first service area of a multicast/broadcast service and an identifier of the multicast/broadcast service, and the terminal device that meets the preset condition includes a terminal device that is located in the first service area and that belongs to a group corresponding to the multicast/broadcast service.

Optionally, in an implementation scenario of the foregoing embodiment, the processor 1910 is further configured to execute the computer instruction, so that the core network element 1900 is enabled to further perform the following steps: receiving a first request message from the first terminal device, where the first request message is used to request to register with the first terminal device; and determining, based on the first request message, that the first terminal device meets the preset condition.

Optionally, in an implementation scenario of the foregoing embodiment, the first request message includes the identifier of the multicast/broadcast service, and the subscription message includes the information about the first service area and the identifier of the multicast/broadcast service. The processor 1910 executes the computer instruction, so that the core network element 1900 is enabled to specifically perform the following step: determining, based on the identifier of the multicast/broadcast service and the fact that the first terminal device is located in the first service area, that the first terminal device meets the preset condition.

Optionally, in an implementation scenario of the foregoing embodiment, the processor 1910 executes the computer instruction, so that the core network element 1900 is enabled to specifically perform the following step: receiving a first request message from the first terminal device, where the first request message is used to request to register with the first terminal device, and the first request message includes the multicast/broadcast access type supported by the first terminal device.

Optionally, in an implementation scenario of the foregoing embodiment, the processor 1910 is further configured to execute the computer instruction, so that the core network element 1900 is enabled to further perform the following step: sending information about a registration area of the first terminal device to the first terminal device, where the registration area is within the first service area, or there is no intersection between the registration area and the first service area.

Optionally, in an implementation scenario of the foregoing embodiment, the information about the registration area of the first terminal device is carried in a response message of the first request message.

Optionally, in an implementation scenario of the foregoing embodiment, the processor 1910 is further configured to execute the computer instruction, so that the core network element 1900 is enabled to further perform the following step: sending the information about the first service area to the first terminal device.

Optionally, in an implementation scenario of the foregoing embodiment, the information about the first service area is carried in a response message of the first request message.

Optionally, in an implementation scenario of the foregoing embodiment, the processor 1910 is further configured to execute the computer instruction, so that the core network element 1900 is enabled to further perform the following steps: sending location information of the first terminal device to the first core network element; receiving information about a second service area of the multicast/broadcast service and the identifier of the multicast/broadcast service from the first core network element, where the second service area is within the first service area; and sending the information about the second service area and the identifier of the multicast/broadcast service to the first terminal device.

Optionally, the core network element 1900 may further include a transceiver, configured to receive (obtain) or send data.

It should be understood that the core network element 1800 shown in FIG. 18 or the core network element 1900 shown in FIG. 19 may be configured to perform operations or procedures of the second core network element in the foregoing method embodiments, and operations and/or functions of the modules and the components in the core network element 1800 or the core network element 1900 are used to implement corresponding procedures of the second core network element in the foregoing method embodiments. For brevity, details are not described herein again.

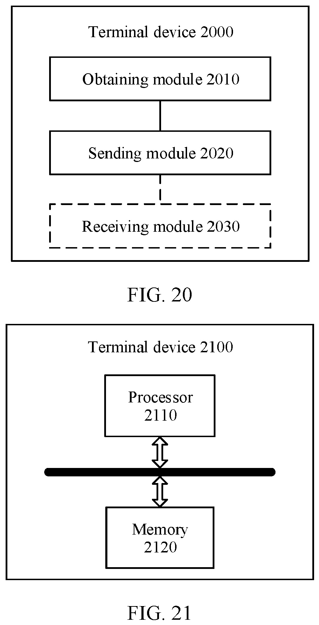

FIG. 20 is a schematic block diagram of a terminal device 2000 according to an embodiment of this application. As shown in FIG. 20, the terminal device 2000 includes:
an obtaining module 2010, configured to obtain a multicast/broadcast access type supported by the terminal device 2000; and
a sending module 2020, configured to send, to a second core network element, the multicast broadcast access type supported by the terminal device 2000.

The terminal device in this embodiment of this application reports, to the core network element, the multicast/broadcast access type supported by the terminal device, so that the core network element determines, based on the multicast/broadcast access type supported by the terminal device, a specific RAT based on which multicast/broadcast transmission is performed. Therefore, multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the multicast/broadcast access type supported by the terminal device 2000 is carried in a first request message, and the first request message is used to request to register with the terminal device 2000.

Optionally, in an implementation scenario of the foregoing embodiment, the sending module 2020 is further configured to send a first request message to the second core network element, where the first request message is used to request to register with the terminal device 2000.

Optionally, in an implementation scenario of the foregoing embodiment, the first request message includes an identifier of a multicast/broadcast service corresponding to a group to which the terminal device belongs.

Optionally, in an implementation scenario of the foregoing embodiment, the terminal device 2000 may further include a receiving module 2030, configured to receive information about a first service area of the multicast/broadcast service from the second core network element. The sending module 2020 is further configured to: when the terminal device 2000 moves out of the first service area, send the first request message to the second core network element.

FIG. 21 is a schematic block diagram of another terminal device 2100 according to an embodiment of this application. As shown in FIG. 21, the terminal device 2100 includes a processor 2110 and a memory 2120. The memory 2120 stores a computer instruction. When the processor 2110 executes the computer instruction, the terminal device 2100 is enabled to perform the following steps: obtaining a multicast/broadcast access type supported by the terminal device 2100; and sending, to a second core network element, the multicast/broadcast access type supported by the terminal device 2100.

Optionally, in an implementation scenario of the foregoing embodiment, the multicast/broadcast access type supported by the terminal device 2100 is carried in a first request message, and the first request message is used to request to register with the terminal device 2100.

Optionally, in an implementation scenario of the foregoing embodiment, the processor 2110 is further configured to execute the computer instruction, so that the terminal device 2100 is enabled to further perform the following step: sending a first request message to the second core network element, where the first request message is used to request to register with the terminal device 2100.

Optionally, in an implementation scenario of the foregoing embodiment, the first request message includes an identifier of a multicast/broadcast service corresponding to a group to which the terminal device 2100 belongs.

Optionally, in an implementation scenario of the foregoing embodiment, the processor 2110 is further configured to execute the computer instruction, so that the terminal device 2100 is enabled to further perform the following steps: receiving information about a first service area of the multicast/broadcast service from the second core network element; and when the terminal device 2100 moves out of the first service area, sending the first request message to the second core network element.

Optionally, the terminal device 2100 may further include a transceiver, configured to receive (obtain) or send data.

It should be understood that the terminal device 2000 shown in FIG. 20 or the terminal device 2100 shown in FIG. 21 may be configured to perform operations or procedures of the terminal device in the foregoing method embodiments, and operations and/or functions of the modules and the components in the terminal device 2000 or the terminal device 2100 are used to implement corresponding procedures of the terminal device in the foregoing method embodiments. For brevity, details are not described herein again.

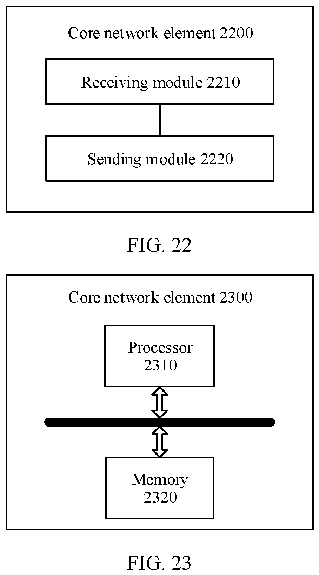

FIG. 22 is a schematic block diagram of still another core network element 2200 according to an embodiment of this application. As shown in FIG. 22, the core network element 2200 may include:
a receiving module 2210, configured to receive a second request message from a first core network element, where the second request message is used to request a multicast/broadcast access type supported by a terminal device that is located in a first service area of a multicast/broadcast service and that belongs to a group corresponding to the multicast/broadcast service; and
a sending module 2220, configured to send, to the first core network element, the multicast broadcast access type supported by the terminal device.

The core network element in this embodiment of this application receives, from the first core network element, the second request message used to request the multicast/broadcast access type supported by the terminal device, and sends, to the first core network element, the multicast/broadcast access type supported by the terminal device. Therefore, the core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the second request message includes a list including the terminal device that is located in the first service area and that belongs to the group corresponding to the multicast/broadcast service.

Optionally, in an implementation scenario of the foregoing embodiment, the receiving module 2210 may be further configured to receive, from a second core network element, the multicast/broadcast access type supported by the terminal device that is located in the first service area and that belongs to the group corresponding to the multicast/broadcast service.

FIG. 23 is a schematic block diagram of still another core network element 2300 according to an embodiment of this application. As shown in FIG. 23, the core network element 2300 may include a processor 2310 and a memory 2320. The memory 2320 stores a computer instruction. When the processor 2310 executes the computer instruction, the core network element 2300 is enabled to perform the following steps: receiving a second request message from a first core network element, where the second request message is used to request a multicast/broadcast access type supported by a terminal device that is located in a first service area of a multicast/broadcast service and that belongs to a group corresponding to the multicast/broadcast service; and sending, to the first core network element, the multicast/broadcast access type supported by the terminal device.

The core network element in this embodiment of this application receives, from the first core network element, the second request message used to request the multicast/broadcast access type supported by the terminal device, and sends, to the first core network element, the multicast/broadcast access type supported by the terminal device. Therefore, the core network element provides, for the first core network element, information about a capability used by the terminal device to determine a specific RAT based on which multicast/broadcast transmission is performed, so that multicast/broadcast transmission can better adapt to a case in which a terminal device supports a plurality of RATs in a 5G mobile communications system, and multicast/broadcast transmission efficiency can be improved.

Optionally, in an implementation scenario of the foregoing embodiment, the second request message includes a list including the terminal device that is located in the first service area and that belongs to the group corresponding to the multicast/broadcast service.

Optionally, in an implementation scenario of the foregoing embodiment, the processor 2310 is further configured to execute the computer instruction, so that the core network element 2300 is enabled to further perform the following step: receiving, from a second core network element, the multicast/broadcast access type supported by the terminal device that is located in the first service area and that belongs to the group corresponding to the multicast/broadcast service.

Optionally, the core network element 2300 may further include a transceiver, configured to receive (obtain) or send data.

It should be understood that the core network element 2200 shown in FIG. 22 or the core network element 2300 shown in FIG. 23 may be configured to perform operations or procedures of the third core network element in the foregoing method embodiments, and operations and/or functions of the modules and the components in the core network element 2200 or the core network element 2300 are used to implement corresponding procedures of the third core network element in the foregoing method embodiments. For brevity, details are not described herein again.

It should be understood that the processor in the embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), afield-programmable gate array (field-programmable gate array, FPGA), generic array logic (generic array logic, GAL), or a combination thereof.

It should be further understood that the memory mentioned in the embodiments of this application may be a volatile memory (volatile memory) or a non-volatile memory (non-volatile memory), or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a flash memory (flash memory), a hard disk drive (hard disk drive, HDD), or a solid-state drive (solid-state drive, SSD). The volatile memory may be a random access memory (random access memory, RAM) that is used as an external cache. By way of example rather than limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

An embodiment of this application further provides a computer-readable storage medium. The computer-readable storage medium stores an instruction. When the instruction is run on a computer, the computer is enabled to perform the steps performed by the first core network element in the foregoing method embodiments.

An embodiment of this application further provides a computer-readable storage medium. The computer-readable storage medium stores an instruction. When the instruction is run on a computer, the computer is enabled to perform the steps performed by the second core network element in the foregoing method embodiments.

An embodiment of this application further provides a computer-readable storage medium. The computer-readable storage medium stores an instruction. When the instruction is run on a computer, the computer is enabled to perform the steps performed by the third core network element in the foregoing method embodiments.

An embodiment of this application further provides a computer-readable storage medium. The computer-readable storage medium stores an instruction. When the instruction is run on a computer, the computer is enabled to perform the steps performed by the terminal device in the foregoing method embodiments.

An embodiment of this application further provides a computer program product including an instruction. When the instruction in the computer program product is run on a computer, the computer performs the steps performed by the first core network element in the foregoing method embodiments.

An embodiment of this application further provides a computer program product including an instruction. When the instruction in the computer program product is run on a computer, the computer performs the steps performed by the second core network element in the foregoing method embodiments.

An embodiment of this application further provides a computer program product including an instruction. When the instruction in the computer program product is run on a computer, the computer performs the steps performed by the third core network element in the foregoing method embodiments.

An embodiment of this application further provides a computer program product including an instruction. When the instruction in the computer program product is run on a computer, the computer performs the steps performed by the terminal device in the foregoing method embodiments.

An embodiment of this application further provides a computer chip. The computer chip enables a computer to perform the steps performed by the first core network element in the foregoing method embodiments.

An embodiment of this application further provides a computer chip. The computer chip enables a computer to perform the steps performed by the second core network element in the foregoing method embodiments.

An embodiment of this application further provides a computer chip. The computer chip enables a computer to perform the steps performed by the third core network element in the foregoing method embodiments.

An embodiment of this application further provides a computer chip. The computer chip enables a computer to perform the steps performed by the terminal device in the foregoing method embodiments.

All or some of the devices provided in the embodiments of this application may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

It should be understood that "first", "second", and various serial numbers in this specification are merely for purpose of distinction for ease of description, but are not intended to limit the scope of this application.

It should be understood that the term "and/or" in this specification describes only an association relationship between associated objects and indicate that three relationships may exist. For example, A and/or B may indicate the following three cases: Only A exists, both A and B exist, and only B exists. In addition, the character "/" in this specification generally indicates an "or" relationship between the associated objects.

It should be understood that sequence numbers of the foregoing processes do not mean an execution sequence in this embodiment of this application. The execution sequence of the processes should be determined according to functions and internal logic of the processes, and should not be construed as any limitation on the implementation processes of this embodiment of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed system, apparatus, and method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions in the embodiments.

In addition, the function units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multicast/broadcast service transmission method, comprising:
obtaining, by a first core network element, a multicast/broadcast access type supported by a terminal device that is located in a first service area of a multicast/broadcast service and that belongs to a group corresponding to the multicast/broadcast service;
determining, by the first core network element, a multicast/broadcast transmission type of the multicast/broadcast service in the first service area based on the multicast/broadcast access type supported by the terminal device; and
notifying, by the first core network element, an access network element corresponding to the multicast/broadcast service to use the multicast/broadcast transmission type to transmit data of the multicast/broadcast service.

2. The method according to claim 1, wherein the determining, by the first core network element, a multicast/broadcast transmission type of the multicast/broadcast service in the first service area based on the multicast/broadcast access type supported by the terminal device comprises:
when a quantity of terminal devices in the group corresponding to the multicast/broadcast service in the first service area is greater than or equal to a preset value, determining, by the first core network element, the multicast/broadcast transmission type of the multicast/broadcast service in the first service area based on the multicast/broadcast access type supported by the terminal device.

3. The method according to claim 1 or 2, wherein the method further comprises:
receiving, by the first core network element, location information of the terminal device from a second core network element;
determining, by the first core network element, a second service area of the multicast/broadcast service based on the location information of the terminal device, wherein the second service area is within the first service area; and
sending, by the first core network element, information about the second service area and an identifier of the multicast/broadcast service to the second core network element.

4. The method according to any one of claims 1 to 3, wherein the obtaining, by a first core network element, a multicast/broadcast access type supported by a terminal device that is located in a first service area of a multicast/broadcast service and that belongs to a group corresponding to the multicast/broadcast service comprises:
requesting, by the first core network element from a unified data management UDM network element, the multicast/broadcast access type supported by the terminal device; and
receiving, by the first core network element from the UDM network element, the multicast/broadcast access type supported by the terminal device.

5. The method according to any one of claims 1 to 3, wherein the obtaining, by a first core network element, a multicast/broadcast access type supported by a terminal device that is located in a first service area of a multicast/broadcast service and that belongs to a group corresponding to the multicast/broadcast service comprises:
sending, by the first core network element, a subscription message to the second core network element, wherein the subscription message is used to subscribe to a multicast/broadcast access type supported by a terminal device that meets a preset condition; and
receiving, by the first core network element, a notification message from the second core network element, wherein the notification message comprises the multicast/broadcast access type supported by the terminal device that meets the preset condition.

6. The method according to claim 5, wherein the subscription message comprises information about the first service area, and the terminal device that meets the preset condition comprises a terminal device located in the first service area; or
the subscription message comprises information about the first service area and the identifier of the multicast/broadcast service, and the terminal device that meets the preset condition comprises the terminal device that is located in the first service area and that belongs to the group corresponding to the multicast/broadcast service.

7. The method according to claim 6, wherein when the subscription message comprises the information about the first service area, and the terminal device that meets the preset condition comprises the terminal device located in the first service area, the method further comprises:
obtaining, by the first core network element based on the multicast/broadcast access type supported by the terminal device that meets the preset condition, the multicast/broadcast access type supported by the terminal device that is located in the first service area and that belongs to the group corresponding to the multicast/broadcast service.

8. A multicast/broadcast service transmission method, wherein the method comprises:
receiving, by a second core network element, a subscription message from a first core network element, wherein the subscription message is used to subscribe to a multicast/broadcast access type supported by a terminal device that meets a preset condition;
receiving, by the second core network element from a first terminal device, a multicast/broadcast access type supported by the first terminal device, wherein the first terminal device meets the preset condition; and
sending, by the second core network element, a notification message to the first core network element, wherein the notification message comprises the multicast/broadcast access type supported by the first terminal device.

9. The method according to claim 8, wherein the subscription message comprises information about a first service area of a multicast/broadcast service, and the terminal device that meets the preset condition comprises a terminal device located in the first service area; or
the subscription message comprises information about a first service area of a multicast/broadcast service and an identifier of the multicast/broadcast service, and the terminal device that meets the preset condition comprises a terminal device that is located in the first service area and that belongs to a group corresponding to the multicast/broadcast service.

10. The method according to claim 8 or 9, wherein the method further comprises:
receiving, by the second core network element, a first request message from the first terminal device, wherein the first request message is used to request to register with the first terminal device; and
determining, by the second core network element based on the first request message, that the first terminal device meets the preset condition.

11. The method according to claim 10, wherein the first request message comprises the identifier of the multicast/broadcast service, and the subscription message comprises the information about the first service area and the identifier of the multicast/broadcast service; and
the determining, by the second core network element based on the first request message, that the first terminal device meets the preset condition comprises:
determining, by the second core network element based on the identifier of the multicast/broadcast service and the fact that the first terminal device is located in the first service area, that the first terminal device meets the preset condition.

12. The method according to claim 8 or 9, wherein the receiving, by the second core network element from a first terminal device, a multicast/broadcast access type supported by the first terminal device comprises:
receiving, by the second core network element, a first request message from the first terminal device, wherein the first request message is used to request to register with the first terminal device, and the first request message comprises the multicast/broadcast access type supported by the first terminal device.

13. The method according to any one of claims 9 to 12, wherein the method further comprises:
sending, by the second core network element, information about a registration area of the first terminal device to the first terminal device, wherein
the registration area is within the first service area, or there is no intersection between the registration area and the first service area.

14. The method according to claim 13, wherein the information about the registration area of the first terminal device is carried in a response message of the first request message.

15. The method according to any one of claims 9 to 12, wherein the method further comprises:
sending, by the second core network element, the information about the first service area to the first terminal device.

16. The method according to claim 15, wherein the information about the first service area is carried in a response message of the first request message.

17. The method according to any one of claims 8 to 16, wherein the method further comprises:
sending, by the second core network element, location information of the first terminal device to the first core network element;
receiving, by the second core network element, information about a second service area of the multicast/broadcast service and the identifier of the multicast/broadcast service from the first core network element, wherein the second service area is within the first service area; and
sending, by the second core network element, the information about the second service area and the identifier of the multicast/broadcast service to the first terminal device.

18. A multicast/broadcast service transmission method, comprising:
obtaining, by a terminal device, a multicast/broadcast access type supported by the terminal device; and
sending, by the terminal device to a second core network element, the multicast/broadcast access type supported by the terminal device.

19. The method according to claim 18, wherein the multicast/broadcast access type supported by the terminal device is carried in a first request message, and the first request message is used to request to register with the terminal device.

20. The method according to claim 18, wherein the method further comprises:
sending, by the terminal device, a first request message to the second core network element, wherein the first request message is used to request to register with the terminal device.

21. The method according to claim 19 or 20, wherein the first request message comprises an identifier of a multicast/broadcast service corresponding to a group to which the terminal device belongs.

22. The method according to claim 21, wherein the method further comprises:
receiving, by the terminal device, information about a first service area of the multicast/broadcast service from the second core network element; and
when the terminal device moves out of the first service area, sending, by the terminal device, the first request message to the second core network element.

23. A multicast/broadcast service transmission method, comprising:
receiving, by a third core network element, a second request message from a first core network element, wherein the second request message is used to request a multicast/broadcast access type supported by a terminal device that is located in a first service area of a multicast/broadcast service and that belongs to a group corresponding to the multicast/broadcast service; and
sending, by the third core network element to the first core network element, the multicast/broadcast access type supported by the terminal device.

24. The method according to claim 23, wherein the second request message comprises a list comprising the terminal device that is located in the first service area and that belongs to the group corresponding to the multicast/broadcast service.

25. The method according to claim 23 or 24, wherein the method further comprises:
receiving, by the third core network element from a second core network element, the multicast/broadcast access type supported by the terminal device that is located in the first service area and that belongs to the group corresponding to the multicast/broadcast service.

26. The method according to any one of claims 1 to 25, wherein the multicast/broadcast transmission type comprises one or more of the following: multicast/broadcast of a new radio NR system, multicast/broadcast of a multicast/broadcast single frequency network MBSFN, or multicast/broadcast of single-cell point-to-multipoint SCPTM

27. A core network element, comprising a processor and a memory, wherein the memory stores a computer instruction, and when the processor executes the computer instruction, the core network element is enabled to perform the method according to any one of claims 1 to 7.

28. A core network element, comprising a processor and a memory, wherein the memory stores a computer instruction, and when the processor executes the computer instruction, the core network element is enabled to perform the method according to any one of claims 8 to 17.

29. A terminal device, wherein the terminal device comprises a processor and a memory, wherein the memory stores a computer instruction, and when the processor executes the computer instruction, the terminal device is enabled to perform the method according to any one of claims 18 to 22.

30. A core network element, comprising a processor and a memory, wherein the memory stores a computer instruction, and when the processor executes the computer instruction, the core network element is enabled to perform the method according to any one of claims 23 to 25.
